# EUROPEAN PATENT APPLICATION

(11) **EP 4 618 684 A1**
(43) Date of publication of application: **17.09.2025**
(21) Application number: 23896845.7
(22) Date of filing: 29.11.2023
(51) Int. Cl.: H04W 74/08

(54) **COMMUNICATION METHOD AND COMMUNICATION APPARATUS**

(30) Priority: 01.12.2022 CN 202211531761
(71) Applicant: Huawei Technologies Co., Ltd., Shenzhen, Guangdong 518129 (CN)
(72) Inventor: YANG, Liu, Shenzhen, Guangdong 518129 (CN); SHI, Meng, Shenzhen, Guangdong 518129 (CN); HU, Xingxing, Shenzhen, Guangdong 518129 (CN); DOU, Shengyue, Shenzhen, Guangdong 518129 (CN)
(74) Representative: Pfenning, Meinig & Partner mbB
(86) International application number: PCT/CN2023/135209
(87) International publication number: WO 2024/114702

(57) **Abstract**

This application provides a communication method and a communication apparatus. The method includes: A first communication apparatus sends first information to a second communication apparatus, where the first information is used to determine first indication information of a first resource, the first resource is used to carry information from the second communication apparatus, a 1^{st} time unit in which the first resource is located is a first time unit, a first time interval between the first time unit and a second time unit is greater than or equal to a signal round-trip delay between the first communication apparatus and the second communication apparatus, and the second time unit is a last time unit used to carry, before the first time unit, information sent by the first communication apparatus to the second communication apparatus. The first communication apparatus receives the information from the second communication apparatus on the first resource. Therefore, a communication delay can be reduced, and communication efficiency can be improved.

## Description

This application claims priority to Chinese Patent Application No. 202211531761.0, filed with the China National Intellectual Property Administration on December 1, 2022 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Compared with a terrestrial cellular network, a non-terrestrial communication network (non-terrestrial network, NTN) is characterized by wide coverage, a low delay, broadband, and low costs. Currently, research on integrated satellite-terrestrial communication has been started, and a system architecture of a mobile communication system supporting the NTN has been preliminarily designed.

However, a network device in the NTN is deployed in the air, and a signal propagation delay in the NTN is far greater than a signal propagation delay in a terrestrial communication network. Currently, some communication mechanisms in the mobile communication system may have problems such as low communication efficiency when being used in the NTN, and corresponding improvement needs to be further made based on a communication characteristic of the NTN.

### SUMMARY

Embodiments of this application provide a communication method and a communication apparatus, to reduce a communication delay and improve communication efficiency.

According to a first aspect, a communication method is provided. The method may be performed by a communication apparatus. The communication apparatus may be executed by a communication device or a configured (or used) module (for example, a chip or a chip system).

The method includes: A first communication apparatus sends first information to a second communication apparatus, where the first information includes first indication information used to determine a first resource, and the first resource is used to carry information from the second communication apparatus. A 1^{st} time unit in which the first resource is located is a first time unit, and a first time interval between the first time unit and a second time unit is greater than or equal to a signal round-trip delay RTD between the first communication apparatus and the second communication apparatus. The second time unit is a last time unit used to carry, before the first time unit, information sent by the first communication apparatus to the second communication apparatus. The first communication apparatus receives the information from the second communication apparatus on the first resource.

According to the foregoing solution, the first communication apparatus does not preconfigure, for the second communication apparatus, a resource used by the second communication apparatus to send the information. When the second communication apparatus needs to send the information to the first communication apparatus, the first communication apparatus allocates, based on an actual communication requirement and a transmission requirement of a current ongoing service, a resource used by the second communication apparatus to send the information, and notifies the second communication apparatus by using indication information. Therefore, resource utilization can be improved, and a communication delay can be reduced. In addition, the signal RTD is considered when the first communication apparatus performs resource allocation, so that occurrence of a conflict between a receiving resource and a sending resource of the second communication apparatus due to a signal round-trip transmission delay can be reduced, and communication efficiency can be improved.

With reference to the first aspect, in some implementations of the first aspect, a transmission periodicity of the first communication apparatus includes a sending time period used to send information and a receiving time period used to receive information, a time unit used to carry the first information and the second time unit belong to the sending time period, and the first time unit belongs to the receiving time period.

According to the solution provided in this application, the first communication apparatus may allocate, based on a real-time communication requirement, a resource used by the first communication apparatus to receive the information from the second communication apparatus. In addition, it is ensured that a time interval between the allocated resource and a last time unit in which the first communication apparatus sends the information to the second communication apparatus before the resource is greater than or equal to the signal RTD between the first communication apparatus and the second communication apparatus. This reduces a problem of a sending and receiving conflict of the second communication apparatus.

With reference to the first aspect, in some implementations of the first aspect, durations of at least two transmission periodicities of the first communication apparatus is the same or different; and/or durations of sending time periods in at least two transmission periodicities of the first communication apparatus are the same or different; and/or durations of receiving time periods in at least two transmission periodicities of the first communication apparatus are the same or different; and/or channels of a same type included in at least two transmission periodicities of the first communication apparatus have a same time domain position or different time domain positions in the transmission periodicities; and/or channels of a same type included in at least two transmission periodicities of the first communication apparatus have a same duration or different durations in the transmission periodicities.

According to the foregoing manner of flexibly allocating a receiving resource provided in this application, durations of sending time periods in different transmission periodicities of the first communication apparatus may be the same or different, and receiving time periods in different periodicities may be the same or different. Specifically, allocation may be performed based on a real-time communication requirement. In addition, for the channels of the same type, time domain positions in different transmission periodicities may be the same or different, and durations in different transmission periodicities may also be the same or different.

With reference to the first aspect, in some implementations of the first aspect, the first resource is a random access resource, and that the first communication apparatus receives the information from the second communication apparatus on the first resource includes: The first communication apparatus receives random access request information from the second communication apparatus on the random access resource.

With reference to the first aspect, in some implementations of the first aspect, the random access resource includes a plurality of random access channel occasions, and the random access request information is carried on a first random access channel occasion in the plurality of random access channel occasions.

With reference to the first aspect, in some implementations of the first aspect, the method further includes: The first communication apparatus sends random access response information to the second communication apparatus in a third time unit, where a time interval between the third time unit and a time unit in which the first random access channel occasion is located is less than or equal to a second time interval, and the second time interval is a time domain length for detecting the random access response information by the second communication apparatus.

According to the foregoing solution, a network device and a terminal device reach a consensus on a time interval for detecting the random access response information. This solution can avoid a case in which the terminal device keeps detecting the random access response information when the network device does not receive the random access request information of the terminal device or the terminal device does not successfully detect the random access response information.

With reference to the first aspect, in some implementations of the first aspect, the first indication information includes one or more of the following information:
time domain position information of the first time unit, a quantity of random access channel occasions in the random access resource, a start location of the random access channel occasion, or a time domain length of the random access channel occasion.

According to the foregoing solution, the first information includes resource configuration information (namely, the first indication information) of the random access resource, so that when the first communication apparatus uses a manner of flexible allocating the resource, the second communication apparatus may determine a resource location of the random access resource by using the first information, to perform a random access procedure by using the random access resource. This improves efficiency of performing random access by the communication apparatus.

With reference to the first aspect, in some implementations of the first aspect, the second time unit is a time unit used to carry first system information, and the first system information includes ephemeris information.

According to the foregoing solution, the first communication apparatus may be configured in a satellite used as an access network device, and the second time unit is used to carry the first system information of the ephemeris information of the satellite. The second communication apparatus needs to determine a distance between the network device and the terminal device based on the ephemeris information, to determine a TA, and then perform the random access procedure. Therefore, the first communication apparatus may determine the random access resource based on the second time unit in which the second communication apparatus needs to receive the ephemeris information before the random access procedure. A time interval between a 1^{st} time unit (namely, the first time unit) of the random access resource and the second time unit is greater than or equal to the signal RTD. In this way, the beam second communication apparatus does not have an uplink-downlink conflict, and can perform the random access procedure.

With reference to the first aspect, in some implementations of the first aspect, the first information is second system information, and the second system information includes scheduling information of system information other than the second system information.

With reference to the first aspect, in some implementations of the first aspect, the first information is used to configure a random access resource corresponding to a first beam. The method further includes: The first communication apparatus sends second information, where the second information is used to configure a random access resource corresponding to a second beam, and the random access resource corresponding to the first beam does not overlap the random access resource corresponding to the second beam.

According to the foregoing solution, random access resources corresponding to different beams of the first communication apparatus do not overlap, so that the first communication apparatus can determine, based on the random access resource on which the received random access request information is carried, that the second communication apparatus is located within coverage of the beam corresponding to the random access resource.

With reference to the first aspect, in some implementations of the first aspect, the second time unit is used to carry a reference signal and/or the first information, and the first time unit is used to receive channel state information from the second communication apparatus.

With reference to the first aspect, in some implementations of the first aspect, the first information further includes third indication information, the third indication information is used to trigger the second communication apparatus to send the channel state information, and the first time interval being greater than or equal to the signal round-trip delay includes: A fifth time interval is greater than or equal to the signal round-trip delay. The fifth time interval is a time interval between a reference moment and a start moment of the first resource, there is an interval of a first processing duration between the reference moment and an end moment of the first information, or there is an interval of a second processing duration between the reference moment and an end moment of the reference signal, and the first processing duration and the second processing duration are determined based on a predefined channel state information processing delay parameter.

According to the foregoing solution, in the first time interval, a signal round-trip delay needs to be overcome to avoid a conflict between sending and receiving, and time before a reference moment further needs to be reserved for the second communication apparatus, so that the second communication apparatus can measure the reference signal, calculate the channel state information, and send the channel state information in sufficient time. In this way, the channel state information sent by the second communication apparatus can arrive at the first communication apparatus in the first time unit. Data transmission is performed in an orderly manner, so that a resource waste can be reduced, and resource utilization can be improved.

With reference to the first aspect, in some implementations of the first aspect, the first information indicates the second communication apparatus to send first data to the first communication apparatus, and that the first resource is used to carry information from the second communication apparatus includes: The first resource is used to carry the first data.

In an example, the first information is random access response information, and the first data is uplink transmission scheduled by using the random access response information. For example, the uplink transmission is a message 3 (message 3, Msg.3) in a four-step random access procedure.

In another example, the first information is DCI, and the first data is uplink communication data that is sent by the terminal device and that is scheduled by using the DCI.

With reference to the first aspect, in some implementations of the first aspect, the second time unit is used to carry the first information.

With reference to the first aspect, in some implementations of the first aspect, the first time interval being greater than or equal to the signal round-trip delay includes: The first time interval is greater than or equal to a sum of the signal round-trip delay and a third time interval. The third time interval is a time interval between receiving the first information by the second communication apparatus and sending the first data by the second communication apparatus.

According to the foregoing solution, in the first time interval, the signal RTD needs to be overcome to avoid a conflict between sending and receiving, and the third time interval further needs to be reserved for the second communication apparatus. In other words, preparation time from receiving the first information to decoding the first information and performing processing such as modulation and coding on the first data based on the first information is reserved for the second communication apparatus, so that uplink data sent by the second communication apparatus can arrive at the first communication apparatus in the first time unit. In this way, data transmission is performed in an orderly manner, so that a resource waste can be reduced, and resource utilization can be improved.

With reference to the first aspect, in some implementations of the first aspect, the first information indicates second data sent by the first communication apparatus to the second communication apparatus, the first information further includes second indication information, the second indication information is used to determine a second resource, the second resource is used to carry the second data, the first resource is used to receive feedback information from the second communication apparatus, and the feedback information indicates that the second communication apparatus successfully receives or fails to receive the second data.

With reference to the first aspect, in some implementations of the first aspect, the second time unit is a last time unit in which the second resource is located. The first time interval being greater than or equal to the signal round-trip delay includes: The first time interval is greater than or equal to a sum of the signal round-trip delay and a fourth time interval, and the fourth time interval is a time interval between receiving the second data by the second communication apparatus and sending the feedback information by the second communication apparatus.

According to the foregoing solution, in the first time interval, the signal RTD needs to be overcome to avoid a conflict between sending and receiving, and the fourth time interval further needs to be reserved for the second communication apparatus. In other words, preparation time from receiving the second data to decoding the second data and determining whether the first data is successfully received to obtain the feedback information is reserved for the second communication apparatus, so that the feedback information sent by the second communication apparatus can arrive at the first communication apparatus in the first time unit. In this way, communication between the first communication apparatus and the second communication apparatus is performed in an orderly manner, so that a resource waste can be reduced, and resource utilization can be improved. With reference to the first aspect, in some implementations of the first aspect, the method further includes: The first communication apparatus configures the first time unit as an uplink time unit based on the second time unit and the first time interval.

With reference to the first aspect, in some implementations of the first aspect, the first indication information includes a first offset, and the first offset is a time offset between a time unit in which the first information is located and the first time unit. Alternatively, the first offset is a time offset between the second time unit and the first time unit. Alternatively, the first indication information includes an identifier of the first time unit.

According to the foregoing solution, the first communication apparatus and the second communication apparatus can reach a consensus on an indication manner of the first indication information, so that the second communication apparatus can determine the first resource based on the first indication information.

With reference to the first aspect, in some implementations of the first aspect, the first communication apparatus sends third information to a third communication apparatus in the first time interval.

According to the foregoing solution, the first communication apparatus may send, in the first time interval, information to a communication apparatus (for example, the third communication apparatus) other than the second communication apparatus, so that resource utilization can be further improved.

According to a second aspect, a communication method is provided. The method may be performed by a communication apparatus. The communication apparatus may be executed by a communication device or a configured (or used) module (for example, a chip or a chip system).

The method includes: A second communication apparatus receives first information from a first communication apparatus, where the first information includes first indication information, the first indication information is used to determine a first resource, and the first resource is used to carry information sent by the second communication apparatus. The second communication apparatus sends the information to the first communication apparatus on the first resource.

With reference to the second aspect, in some implementations of the second aspect, the first resource is a random access resource. That the second communication apparatus sends the information to the second communication apparatus on the first resource includes: The second communication apparatus sends random access request information to the first communication apparatus on the random access resource.

With reference to the second aspect, in some implementations of the second aspect, the random access resource includes a plurality of random access channel occasions. That the second communication apparatus sends random access request information to the first communication apparatus on the random access resource includes: The second communication apparatus sends the random access request information to the first communication apparatus on a first random access channel occasion, where the plurality of random access channel occasions include the first random access channel occasion.

With reference to the second aspect, in some implementations of the second aspect, the method further includes: The second communication apparatus receives random access response information from the first communication apparatus in a second time interval after a fifth time unit, where the fifth time unit is a downlink time unit whose identifier is the same as an identifier of an uplink time unit in which the first random access channel occasion is located.

With reference to the second aspect, in some implementations of the second aspect, the first indication information includes one or more of the following information:
time domain position information of a first time unit, a quantity of random access channel occasions in the random access resource, a start location of the random access channel occasion, or a time domain length of the random access channel occasion.

With reference to the second aspect, in some implementations of the second aspect, the time domain position information includes a first offset, and the first offset is a time offset between a time unit in which the first information is located and the first time unit. Alternatively, the first offset is a time offset between a time unit in which first system information is located and the first time unit, and the first system information includes ephemeris information. Alternatively, the first indication information includes an identifier of the first time unit.

With reference to the second aspect, in some implementations of the second aspect, the first information is second system information, and the second system information includes scheduling information of system information other than the second system information.

According to a third aspect, a communication apparatus is provided. In a design, the apparatus may include a module that is in one-to-one correspondence with the method/operation/step/action described in the first aspect. The module may be a hardware circuit, may be software, or may be implemented by using a combination of the hardware circuit and the software. In a design, the apparatus includes: A transceiver unit, configured to send first information to a second communication apparatus, where the first information includes first indication information, the first indication information is used to determine a first resource, the first resource is used to carry information from the second communication apparatus, a 1^{st} time unit in which the first resource is located is a first time unit, a first time interval between the first time unit and the second time unit is greater than or equal to a signal round-trip delay RTD between the first communication apparatus and the second communication apparatus, and the second time unit is a last time unit used to carry, before the first time unit, information sent by the first communication apparatus to the second communication apparatus. The transceiver unit is further configured to receive the information from the second communication apparatus on the first resource. Optionally, the communication apparatus further includes a processing unit. The processing unit is configured to control the transceiver unit to receive or send information.

With reference to the third aspect, in some implementations of the third aspect, a transmission periodicity of the first communication apparatus includes a sending time period used to send information and a receiving time period used to receive information. A time unit used to carry the first information and the second time unit belong to the sending time period, and the first time unit belongs to the receiving time period.

With reference to the third aspect, in some implementations of the third aspect, durations of at least two transmission periodicities of the first communication apparatus is the same or different; and/or durations of sending time periods in at least two transmission periodicities of the first communication apparatus are the same or different; and/or durations of receiving time periods in at least two transmission periodicities of the first communication apparatus are the same or different; and/or channels of a same type included in at least two transmission periodicities of the first communication apparatus have a same time domain position or different time domain positions in the transmission periodicities; and/or channels of a same type included in at least two transmission periodicities of the first communication apparatus have a same duration or different durations in the transmission periodicities.

With reference to the third aspect, in some implementations of the third aspect, the first resource is a random access resource. The transceiver unit is specifically configured to receive random access request information from the second communication apparatus on the random access resource.

With reference to the third aspect, in some implementations of the third aspect, the random access resource includes a plurality of random access channel occasions, and the random access request information is carried on a first random access channel occasion in the plurality of random access channel occasions.

With reference to the third aspect, in some implementations of the third aspect, the transceiver unit is further configured to send random access response information to the second communication apparatus in a third time unit, where a time interval between the third time unit and a time unit in which the first random access channel occasion is located is less than or equal to a second time interval, and the second time interval is a time domain length for detecting the random access response information by the second communication apparatus.

With reference to the third aspect, in some implementations of the third aspect, the first indication information includes one or more of the following information:
time domain position information of the first time unit, a quantity of random access channel occasions in the random access resource, a start location of the random access channel occasion, or a time domain length of the random access channel occasion.

With reference to the third aspect, in some implementations of the third aspect, the second time unit is a time unit used to carry first system information, and the first system information includes ephemeris information.

With reference to the third aspect, in some implementations of the third aspect, the first information is second system information, and the second system information includes scheduling information of system information other than the second system information.

With reference to the third aspect, in some implementations of the third aspect, the first information is used to configure a random access resource corresponding to a first beam. The transceiver unit is further configured to send second information, where the second information is used to configure a random access resource corresponding to a second beam, and the random access resource corresponding to the first beam does not overlap the random access resource corresponding to the second beam.

With reference to the third aspect, in some implementations of the third aspect, the second time unit is used to carry a reference signal, and the first time unit is used to receive channel state information from the second communication apparatus.

With reference to the third aspect, in some implementations of the third aspect, the first information is random access response information, and the first time unit is used to receive uplink transmission scheduled by using the random access response information.

With reference to the third aspect, in some implementations of the third aspect, the first information indicates the second communication apparatus to send first data to the first communication apparatus, and that the first resource is used to carry information from the second communication apparatus includes: The first resource is used to carry the first data.

With reference to the third aspect, in some implementations of the third aspect, the second time unit is used to carry the first information.

With reference to the third aspect, in some implementations of the third aspect, the second time unit is used to carry the first information, and the first time interval being greater than or equal to the signal round-trip delay includes: The first time interval is greater than or equal to a sum of the signal round-trip delay and a third time interval. The third time interval is a time interval between receiving the first information by the second communication apparatus and sending the first data by the second communication apparatus.

With reference to the third aspect, in some implementations of the third aspect, the first information indicates second data sent by the first communication apparatus to the second communication apparatus. The first information further includes second indication information, the second indication information is used to determine a second resource, the second resource is used to carry the second data, the first resource is used to receive feedback information from the second communication apparatus, and the feedback information indicates that the second communication apparatus successfully receives or fails to receive the second data.

With reference to the third aspect, in some implementations of the third aspect, the second time unit is a last time unit in which the second resource is located. The first time interval being greater than or equal to the signal round-trip delay includes: The first time interval is greater than or equal to a sum of the signal round-trip delay and a fourth time interval. The fourth time interval is a time interval between receiving the second data by the second communication apparatus and sending the feedback information by the second communication apparatus.

With reference to the third aspect, in some implementations of the third aspect, the processing unit is further configured to configure the first time unit as an uplink time unit based on the second time unit and the first time interval.

With reference to the third aspect, in some implementations of the third aspect, the transceiver unit is configured to send third information to a third communication apparatus in a first time interval, where a fourth time unit is located between the second time unit and the first time unit.

With reference to the third aspect, in some implementations of the third aspect, the first indication information includes a first offset, and the first offset is a time offset between a time unit in which the first information is located and the first time unit. Alternatively, the first offset is a time offset between the second time unit and the first time unit. Alternatively, the first indication information includes an identifier of the first time unit.

According to a fourth aspect, a communication apparatus is provided. In a design, the apparatus may include a module that is in one-to-one correspondence with the method/operation/step/action described in the second aspect. The module may be a hardware circuit, may be software, or may be implemented by using a combination of the hardware circuit and the software. In a design, the apparatus includes: a transceiver unit, configured to receive first information from a first communication apparatus, where the first information includes first indication information, the first indication information is used to determine a first resource, and the first resource is used to carry information sent by the second communication apparatus. The transceiver unit is further configured to send the information to the first communication apparatus on the first resource. Optionally, the communication apparatus further includes a processing unit. The processing unit is configured to control the transceiver unit to receive or send information.

With reference to the fourth aspect, in some implementations of the fourth aspect, the first resource is a random access resource, and the transceiver unit is specifically configured to send random access request information to the second communication apparatus on the random access resource.

With reference to the fourth aspect, in some implementations of the fourth aspect, the random access resource includes a plurality of random access channel occasions. The transceiver unit is specifically configured to send the random access request information to the first communication apparatus on a first random access channel occasion, where the plurality of random access channel occasions include the first random access channel occasion.

With reference to the fourth aspect, in some implementations of the fourth aspect, the transceiver unit is further configured to receive random access response information from the first communication apparatus in a second time interval after a fifth time unit, where the fifth time unit is a downlink time unit whose identifier is the same as an identifier of an uplink time unit in which the first random access channel occasion is located.

With reference to the fourth aspect, in some implementations of the fourth aspect, the first indication information includes one or more of the following information:
time domain position information of a first time unit, a quantity of random access channel occasions in the random access resource, a start location of the random access channel occasion, or a time domain length of the random access channel occasion.

With reference to the fourth aspect, in some implementations of the fourth aspect, the time domain position information includes a first offset, and the first offset is a time offset between a time unit in which the first information is located and the first time unit. Alternatively, the first offset is a time offset between a time unit in which first system information is located and the first time unit, and the first system information includes ephemeris information. Alternatively, the first indication information includes an identifier of the first time unit.

With reference to the fourth aspect, in some implementations of the fourth aspect, the first information is second system information, and the second system information includes scheduling information of system information other than the second system information.

According to a fifth aspect, a communication apparatus is provided, and includes a processor. The processor may implement the method according to any possible implementation of the first aspect or the method according to any possible implementation of the second aspect. Optionally, the communication apparatus further includes a memory. The processor is coupled to the memory, and may be configured to execute instructions in the memory, to implement the method according to any possible implementation of the first aspect or the method according to any possible implementation of the second aspect. Optionally, the communication apparatus further includes a communication interface, and the processor is coupled to the communication interface. In this embodiment of this application, the communication interface may be a transceiver, a pin, a circuit, a bus, a module, or a communication interface of another type. This is not limited.

In an implementation, the communication apparatus is a communication device. When the communication apparatus is the communication device (for example, a terminal device or a network device), the communication interface may be a transceiver or an input/output interface.

In another implementation, the communication apparatus is a chip configured in a communication device. When the communication apparatus is the chip configured in the communication device, the communication interface may be an input/output interface.

Optionally, the transceiver may be a transceiver circuit. Optionally, the input/output interface may be an input/output circuit.

According to a sixth aspect, a processor is provided, and includes an input circuit, an output circuit, and a processing circuit. The processing circuit is configured to receive a signal by using the input circuit, and transmit a signal by using the output circuit, so that the processor performs the method according to any possible implementation of the first aspect or the method according to any possible implementation of the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a seventh aspect, a computer program product is provided. The computer program product includes a computer program (which may also be referred to as code or instructions). When the computer program is run, a computer is enabled to perform the method according to any possible implementation of the first aspect or the method according to any possible implementation of the second aspect.

According to an eighth aspect, a computer-readable storage medium is provided. The computer-readable storage medium stores a computer program (which may also be referred to as code or instructions). When the computer program is run on a computer, the computer is enabled to perform the method according to any possible implementation of the first aspect or the method according to any possible implementation of the second aspect.

In some implementations of the eighth aspect, the computer may be a communication device (for example, a terminal device or a network device).

According to a ninth aspect, a communication system is provided, and includes at least one first communication apparatus and at least one second communication apparatus in the foregoing descriptions.

### BRIEF DESCRIPTION OF DRAWINGS

FIG. 1 is a diagram of an architecture of a communication system according to an embodiment of this application;
FIG. 2 is a diagram of an architecture of an NTN network to which embodiments of this application are applicable;
FIG. 3 is a diagram of another architecture of an NTN network to which embodiments of this application are applicable;
FIG. 4 is a diagram of a time sequence relationship between DCI and a PUSCH according to an embodiment of this application;
FIG. 5 is a diagram of a time sequence relationship between a PDSCH and feedback information of the PDSCH according to an embodiment of this application;
FIG. 6 is a diagram of a resource configuration manner according to an embodiment of this application;
FIG. 7 is a diagram of a guard interval between an uplink resource and a downlink resource according to an embodiment of this application;
FIG. 8 is a schematic flowchart of a communication method according to an embodiment of this application;
FIG. 9 to FIG. 14 each are a diagram of a communication method according to an embodiment of this application;
FIG. 15 and FIG. 16 each are a diagram of a transmission periodicity according to an embodiment of this application;
FIG. 17 is a block diagram of an example of a communication apparatus according to an embodiment of this application; and
FIG. 18 is a diagram of a structure of another example of a communication apparatus according to an embodiment of this application.

### DESCRIPTION OF EMBODIMENTS

The following describes technical solutions of this application with reference to accompanying drawings.

In embodiments of this application, "/" may indicate an "or" relationship between associated objects. For example, A/B may indicate A or B. "And/or" may indicate that there are three relationships between the associated objects. For example, A and/or B may indicate the following three cases: Only A exists, both A and B exist, and only B exists, where A and B may be singular or plural. For ease of describing the technical solutions in embodiments of this application, words such as "first" and "second" may be used for differentiation in embodiments of this application. The words such as "first" and "second" do not limit a quantity and an execution sequence, and the words such as "first" and "second" do not limit a definite difference. In embodiments of this application, words such as "example" or "for example" are used to represent an example, evidence, or a description. Any embodiment or design solution described as "example" or "for example" should not be explained as being more preferred or having more advantages than another embodiment or design solution. The words such as "example" or "for example" are intended to present a related concept in a specific manner for ease of understanding. In embodiments of this application, "at least one (type)" may alternatively be described as "one (type) or more (types)", and "a plurality of (types)" may be two (types), three (types), four (types), or more (types). This is not limited in this application.

The technical solutions in embodiments of this application may be applied to various communication systems, for example, a long term evolution (long term evolution, LTE) system, a 5th generation (5th generation, 5G) mobile communication system, or new radio (new radio, NR), or a non-terrestrial network (non-terrestrial network, NTN), and a future communication system, for example, a 6th generation mobile communication system. This is not limited in this application.

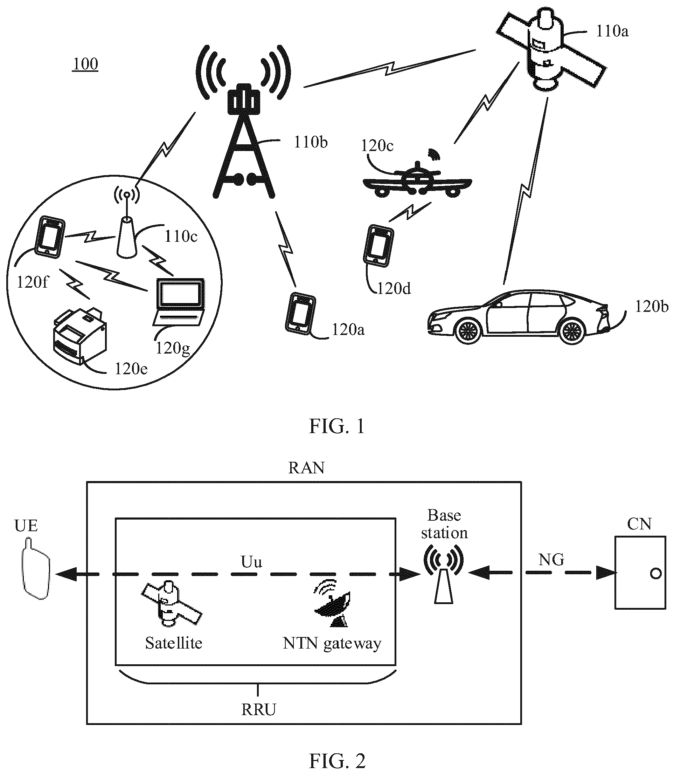

FIG. 1 is a diagram of an architecture of a communication system 100 to which embodiments of this application are applicable. As shown in FIG. 1, the communication system 100 may include at least one access network device (for example, 110a, 110b, and 110c in FIG. 1), and may further include at least one terminal (for example, 120a to 120j in FIG. 1). The access network devices may be connected to each other in a wired or wireless manner. FIG. 1 is merely a diagram. The communication system may further include another network device, for example, may further include a wireless relay device and a wireless backhaul device.

In an NTN network, a satellite may implement transparent payload (transparent payload) transmission or regenerative payload (regenerative payload) transmission.

FIG. 2 is a diagram of an architecture of an NTN network to which embodiments of this application are applicable. As shown in FIG. 2, user equipment (user equipment, UE) communicates with a ground base station via a ground base station through a universal terrestrial radio access network-user (universal terrestrial radio access network-user, Uu) interface. A satellite may implement transparent payload transmission between a user and the ground base station. The satellite and an NTN gateway may be considered as a remote radio unit (remote radio unit) of the ground base station, and implement transparent forwarding of a signal. In other words, the satellite supports only functions such as radio frequency filtering and frequency conversion and amplification, where a signal waveform is unchanged. Forwarding of the satellite is transparent to a terminal device. The ground base station may communicate with a core network (core network, CN) through a next generation network (next generation, NG) interface, and exchange, through the NG interface, non-access stratum (non-access stratum, NAS) signaling of the core network and service data of the UE.

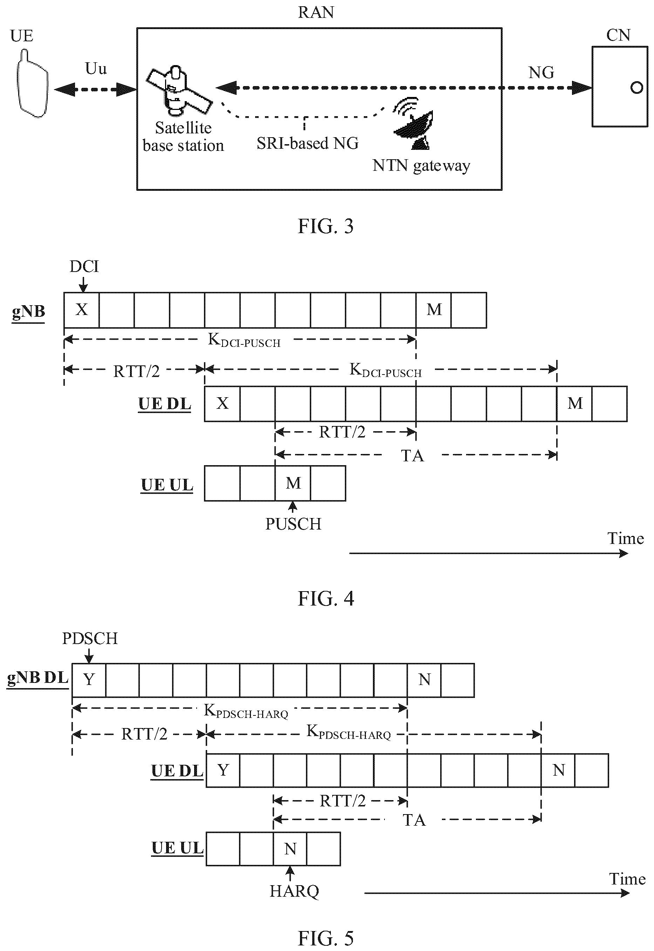

FIG. 3 is a diagram of another architecture of an NTN network to which embodiments of this application are applicable. As shown in FIG. 3, a satellite has some or all functions of an access network device, and may be referred to as a satellite base station. The satellite can provide a radio access service, and schedule a radio resource for a terminal device that accesses a network via the satellite base station. The satellite base station communicates with UE through a Uu interface. The satellite base station may communicate with a CN through an NG interface, and the satellite base station and the core network may exchange, through the NG interface, NAS signaling and service data of the UE. A satellite radio interface (satellite radio interface, SRI) interface is a feeder link between an NTN gateway and the satellite. In FIG. 3, the SRI interface may be used as a part of the NG interface to implement communication and interaction between the satellite and the core network.

A network device provided in embodiments of this application may be an access network device, for example, a base station (base station), a NodeB (NodeB), an evolved NodeB (evolved NodeB, eNodeB, or eNB), a transmission reception point (transmission reception point, TRP), a next generation NodeB (next generation NodeB, gNB) in a 5th generation (5th generation, 5G) mobile communication system, an access network device in an open radio access network (open radio access network, O-RAN, or open RAN), a next generation base station in a 6th generation (6th generation, 6G) mobile communication system, a base station in a future mobile communication system, or an access node in a wireless fidelity (wireless fidelity, Wi-Fi) system. Alternatively, the network device may be a module or a unit that completes some functions of the base station, for example, may be a central unit (central unit, CU), a distributed unit (distributed unit, DU), a central unit control plane (CU control plane, CU-CP) module, or a central unit user plane (CU user plane, CU-UP) module. The network device may be a satellite (for example, 110a in FIG. 1 or the satellite base station in FIG. 2), or may be a macro base station (for example, 110b in FIG. 1). Alternatively, the access network device may be a micro base station or an indoor base station (for example, 110c in FIG. 1), or may be a relay node, a donor node, or the like. A specific technology and a specific device form that are used by the access network device are not limited in this application.

In embodiments of this application, some or all functions of the network device may be on a non-terrestrial network (non-terrestrial network, NTN) platform (where the NTN platform includes but is not limited to a satellite, an uncrewed aircraft system (unmanned aircraft system, UAS), a high altitude communication platform (high altitude platform station, HAPS), and the like), or some or all functions of the network device are on the ground, and the NTN platform is responsible for forwarding a signal between the UE and the access network device.

The terminal device provided in embodiments of this application may also be referred to as a terminal, and includes but is not limited to user equipment (user equipment, UE), a mobile station, a mobile terminal, or the like. The terminal device may be widely used in various scenarios for communication. For example, the scenario includes but is not limited to at least one of the following scenarios: enhanced mobile broadband (enhanced mobile broadband, eMBB), ultra-reliable low-latency communication (ultra-reliable low-latency communication, URLLC), massive machine-type communication (massive machine-type communication, mMTC), device-to-device (device-to-device, D2D) communication, vehicle to everything (vehicle to everything, V2X) communication, machine-type communication (machine-type communication, MTC), an internet of things (internet of things, IOT), virtual reality, augmented reality, industrial control, self-driving, telemedicine, a smart grid, smart furniture, smart office, smart wearable, smart transportation, a smart city, or the like. The terminal device may be a mobile phone (for example, mobile phones 120a, 120d, and 120f in FIG. 1), a tablet computer, a computer (for example, the computer 120g in FIG. 1) having a wireless transceiver function, a wearable device, a vehicle (for example, 120b in FIG. 1), an uncrewed aerial vehicle, a helicopter, an airplane (for example, 120c in FIG. 1), a ship, a robot, a mechanical arm, a smart home device (for example, the printer 120e in FIG. 1), or the like. A specific technology and a specific device form that are used by the terminal device are not limited in this application.

The access network device and/or the terminal device may be located in fixed locations, or may be movable. The access network device and/or the terminal device may be deployed on land, including an indoor or outdoor scenario and a handheld or vehicle-mounted scenario; or may be deployed on water; or may be deployed on an airplane, a balloon, and an artificial satellite in the air. An environment/scenario in which the access network device and the terminal device are located is not limited in this application. The access network device and the terminal device may be deployed in a same environment/scenario or different environments/scenarios. For example, the access network device and the terminal device are both deployed on land; or the access network device is deployed on land, and the terminal device is deployed on water. Examples are not enumerated one by one.

The following describes related technologies and terms in embodiments of this application.
1. Time sequence relationship between downlink control information (downlink control information, DCI) and a physical uplink shared channel (physical uplink shared channel, PUSCH) that is scheduled by using the DCI

For example, as shown in FIG. 4, a gNB sends DCI to UE in a downlink (downlink, DL) slot X, where the DCI indicates the UE to send a PUSCH, and the gNB further notifies the UE that a time interval between the DCI and the PUSCH indicated by the DCI is K_{DCI-PUSCH}. The DCI sent by the gNB is transmitted to the UE through a radio channel, and the UE receives the DCI in a DL slot X of the UE. A time interval between the gNB DL slot X in which the gNB sends the DCI and the UE DL slot X in which the UE receives the DCI is a signal transmission delay between a UE DL and a gNB DL that is a half duration of signal round-trip time (round-trip time, RTT) (namely, RTT/2). It can be learned that, because signal transmission between the gNB and the UE needs a specific period of time, a duration of a time interval between a UE DL slot and a gNB DL slot that have a same DL slot identifier is RTT/2. For example, the duration of the interval between the UE DL slot X and the gNB DL slot X that have an identifier of X is RTT/2. After receiving the DCI, the UE may determine, based on an indication of the gNB, that a time interval between a UL slot M in which the gNB receives the PUSCH and the DL slot X in which the gNB sends the DCI is K_{DCI-PUSCH}. However, because there is also a transmission delay (where a duration of the transmission delay is RTT/2) when an uplink (uplink, UL) signal sent by the UE to the gNB is transmitted to the gNB, the UE determines, based on a timing advance (timing advance, TA) configured by the gNB, a UL slot M in which the UE sends the PUSCH. In this way, after the PUSCH sent by the UE in the UL slot M undergoes the duration of the transmission delay RTT/2, the gNB can receive the PUSCH in the gNB UL slot M, as shown in FIG. 4. Therefore, a duration of an interval between a UE UL slot and a gNB UL slot that have a same slot identifier is RTT/2. For example, the duration of the interval between the UE UL slot M and the gNB UL slot M that have an identifier of M is RTT/2.

In this application, due to impact of a signal transmission delay and a signal processing delay of a device, time units (for example, the time unit may be a symbol, a mini-slot, a slot, a subframe, or a frame) that have a same identifier and a same transmission direction (for example, a DL or a UL) may have different absolute time in different devices. As shown in FIG. 4, absolute time of the gNB DL slot X and absolute time of the UE DL slot X are different, and absolute time of the gNB UL slot M and absolute time of the UE UL slot M are different.

A time interval between uplink scheduling DCI and the PUSCH is K_{DCI-PUSCH}, where for a duration of K_{DCI-PUSCH}, an information processing delay (for example, time of processing such as demodulation and decoding of the DCI and time of processing such as coding and modulation of the PUSCH) of the UE and transmission delays of the DCI and the PUSCH are mainly considered. K_{DCI-PUSCH} may be indicated by the gNB to a terminal device by using an indication field in the uplink scheduling DCI. Alternatively, in a mobile communication system, because a high transmission delay is caused by a large distance between a base station and a terminal device in an NTN network, the gNB may configure a time interval K_{offset} for the terminal device by using a medium access control (medium access control, MAC) control element (control element, CE) after an initial access phase, where K_{offset} is applicable to uplink scheduling and downlink scheduling in a period of time, and the gNB indicates one K₂ in the uplink scheduling DCI. After receiving the uplink scheduling DCI, the terminal device may determine a time interval K_{DCI-PUSCH} =K_{offset} +K₂ between the DCI and the PUSCH.

### 2. Time sequence relationship between a PDSCH and feedback information of the PDSCH

For example, as shown in FIG. 5, a gNB sends a PDSCH to UE in a DL slot Y. Correspondingly, the UE receives the PDSCH in a UE DL slot Y. There is a transmission delay of RTT/2 between the UE DL slot and the gNB DL slot. The gNB further notifies the UE that a time interval between the PDSCH and feedback information of the PDSCH is K_{PDSCH-HARQ}. The feedback information of the PDSCH may be acknowledgment (acknowledgment, ACK) feedback information (denoted as a HARQ-ACK) or non-acknowledgment (non-acknowledgment, NACK) feedback information (denoted as a HARQ-NACK) in a hybrid automatic repeat request (hybrid automatic repeat request, HARQ). The UE may determine, based on an indication of the gNB, that a time interval between the DL slot Y in which the gNB sends the PDSCH and a UL slot N in which the gNB receives the feedback information is K_{PDSCH-HARQ}. The UE may
send HARQ feedback information based on a slot N having a time interval of K_{PDSCH-HARQ} with a slot Y in UE UL slots, so that the gNB receives the HARQ feedback information of the UE in a gNB UL slot N. The UE determines, based on a timing advance (timing advance, TA) configured by the gNB, the UL slot N in which the UE sends the HARQ feedback information. In this way, after the HARQ feedback information sent by the UE in the UL slot N undergoes a duration of the transmission delay RTT/2, the gNB can receive the HARQ feedback information in the gNB UL slot N, as shown in FIG. 5.

Similar to K_{DCI-PUSCH}, for a duration of K_{PDSCH-HARQ}, an information processing delay (for example, time of processing such as demodulation and decoding of the PDSCH and time of processing such as coding and modulation of the HARQ) of the UE and transmission delays of the PDSCH and the HARQ are mainly considered. K_{PDSCH-HARQ} may be indicated by the gNB to a terminal device by using an indication field in downlink scheduling DCI for scheduling the PDSCH. Alternatively, when a transmission delay is high, K_{PDSCH-HARQ} includes K_{offset} configured by using a MAC CE and K₁ indicated in the downlink scheduling DCI, that is, K_{PDSCH-HARQ} =K_{offset} +K₁.

### 3. Time division duplex (time division duplex, TDD) frame format

In a mobile communication system, uplink and downlink resources in a TDD mode are configured by using four levels of signaling: cell-specific (cell-specific) radio resource control (radio resource control, RRC) signaling, UE-specific (UE-specific) RRC signaling, group-common (group-common) DCI, and UE-specific DCI. After a network device configures the uplink resource and the downlink resource by using the cell-specific RRC signaling, another resource is a flexible resource, and lower-level signaling can be used to rewrite only a current flexible resource as an uplink resource or a downlink resource.

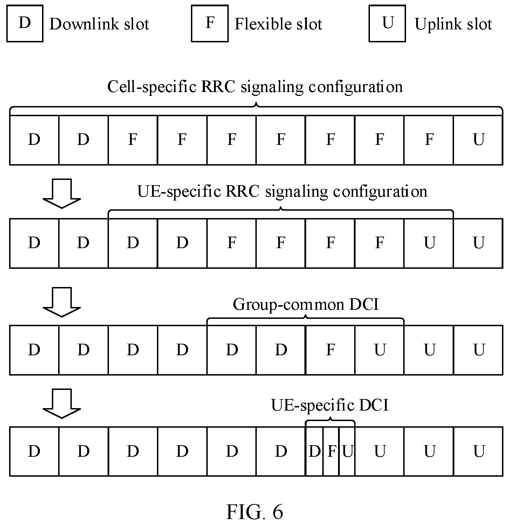

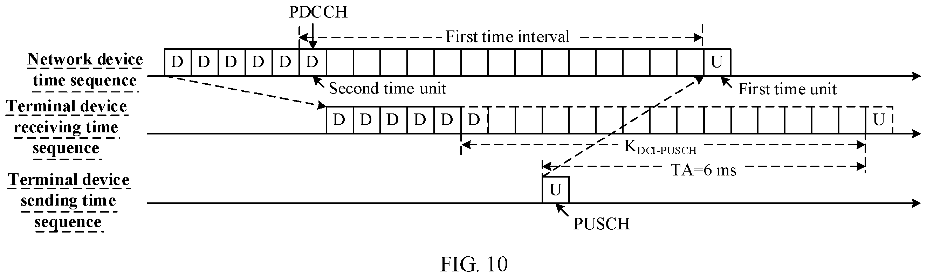

For example, as shown in FIG. 6, the network device configures first two slots in a system frame as downlink slots by using the cell-specific RRC signaling, to be specific, symbols in the first two slots are all downlink resources; and the network device configures a last slot as an uplink slot, to be specific, symbols in the last slot are all uplink resources. Other slots are flexible slots. In FIG. 6, 10 slots in one system frame are used as an example for description. A periodicity of a frame format may be configured by using the cell-specific RRC signaling, and the frame format configured by using the cell-specific RRC signaling periodically appears. The periodicity may be one of {0.5 ms, 0.625 ms, 1 ms, 1.25 ms, 2 ms, 2.5 ms, 5 ms, 10 ms}. The network device may rewrite, by using the UE-specific RRC signaling, a flexible resource configured by using the cell-specific RRC signaling. As shown in FIG. 6, the UE-specific RRC signaling is used to rewrite a 3^{rd} slot and a 4^{th} slot as downlink slots and rewrite a 9^{th} slot as an uplink slot, and other slots that are not rewritten are still flexible slots. Further, the network device may rewrite a current flexible resource by using group-common DCI (which may be referred to as a slot format indicator (slot format indicator, SFI)) of a UE group to which the UE belongs. As shown in FIG. 6, the group-common DCI is used to rewrite a 5^{th} slot and a 6^{th} slot as downlink slots and rewrite an 8^{th} slot as an uplink slot. In addition, in communication, the network device may further rewrite a flexible resource by using the UE-specific DCI. As shown in FIG. 6, the UE-specific DCI is used to rewrite some symbols in a 7^{th} slot as downlink resources and rewrite some symbols as uplink resources.

It should be noted that, in FIG. 6, an example in which four levels of signaling are sequentially used to configure a frame format is used for description. In specific implementation, the network device may not send signaling at one level, but send signaling at a next level to configure the frame format. For example, the network device may not send the UE-specific RRC signaling, and rewrites, by using the group-common DCI, a flexible resource configured by using the cell-specific RRC signaling.

As a supplement and extension of a terrestrial network, an NTN network can implement wide-area seamless coverage that cannot be implemented by a wired telephone network and a terrestrial mobile communication network, to effectively resolve an Internet access problem in areas with insufficient communication infrastructure. As shown in Table 1, satellites (or UAS platforms) may be classified into low earth orbit (low earth orbit, LEO) satellites, medium earth orbit (medium earth orbit, MEO) satellites, high elliptical orbit (high elliptical orbit, HEO) earth satellites, geostationary earth orbit (geostationary earth orbit, GEO) satellites, and uncrewed aircraft system (unmanned aircraft system, UAS) platforms (including a high altitude platform station (high altitude platform station, HAPS)) based on orbital altitudes.

**Table 1**

| Platform | Altitude range | Orbit | Typical beam size |
|---|---|---|---|
| LEO satellite | 300 km to 1500 km | Circle around the earth | 100 km to 1000 km |
| MEO satellite | 7000 km to 25000 km | | 100 km to 1000 km |
| HEO satellite | 400 km to 50000 km | Ellipse around the earth | 200 km to 3500 km |
| GEO | 35786 km | Fixed location relative to an elevation/azimuth of a given earth point | 200 km to 3500 km |
| UAS platform (including an HAPS) | 8 km to 50 km (HAPS: 20 km) | | 5 km to 200 km |

A propagation delay in a terrestrial mobile system is usually at a microsecond (µs) level. In contrast, a propagation delay of the NTN is much longer, ranging from several milliseconds to hundreds of milliseconds. The propagation delay is related to an orbital altitude of the satellite (or UAS platform), an elevation angle of the UE, and a distance between the satellite (or UAS platform) and the UE. As shown in Table 2, when the elevation angle of the UE is 10°, an orbital altitude of the LEO is 600 km, and a one-way distance between the UE and the satellite is 1932.24 km, a one-way signal delay, namely, RTT/2, is 6.44 ms, and a signal round-trip delay RTT is 6.88. For the GEO satellite, a signal round-trip delay is up to 270.572 ms.

**Table 2**

| | LEO, orbital altitude: 600 km | | LEO, orbital altitude: 1500 km | | GEO, orbital altitude: 35786 km | |
|---|---|---|---|---|---|---|
| Elevation angle: 10° | Distance (km) | Delay (ms) | Distance (km) | Delay (ms) | Distance (km) | Delay (ms) |
| One-way | 1932.24 | 6.44 | 3647.5 | 12.16 | 40586 | 135.286 |
| Round-trip | 3864.48 | 12.88 | 7295 | 24.32 | 81172 | 270.572 |

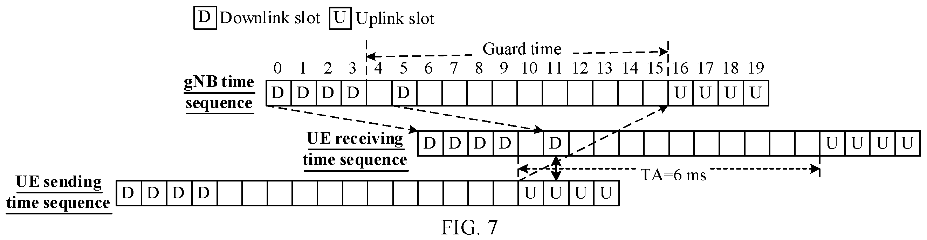

In a TDD communication mode, when configuring a frame format for a terminal device, a network device needs to reserve guard time (guard time) to prevent an uplink-downlink conflict of the terminal device. For example, a subcarrier spacing (subcarrier spacing, SCS) is 30 kHz. A system frame of 10 ms includes 20 slots whose duration is 0.5 ms. In a system frame, a gNB configures the frame format for the terminal device, as shown in FIG. 7. For example, if an RTD between the UE and the gNB is 6 ms, a one-way signal propagation delay is 3 ms, that is, six slots. As shown in FIG. 7, the gNB sends downlink information to the UE in a DL slot 0, and the UE receives the downlink information in a UE DL slot 0 3 ms later. The network device configures a slot 16 to a slot 19 as UL slots. To ensure that the gNB can receive uplink information of the UE in the slot 16 to the slot 19 in a gNB time sequence, a sending time sequence on a UE side is advanced by one TA, that is, one RTD, relative to a receiving time sequence on the UE side. In this way, the UE is located in the UL slot 16 after a DL slot 3 in the receiving time sequence based on the sending time sequence. If the gNB sends downlink information to the UE in a gNB slot 5, the downlink information arrives at the UE within uplink slot time of the UE, and the UE cannot receive the downlink information from the gNB. Therefore, the gNB needs to reserve a slot 4 to a slot 15 as the guard time. Within the guard time, the gNB does not send downlink information to the UE, and does not indicate the UE to send uplink information, to prevent an uplink-downlink conflict of the UE. In the example shown in FIG. 7, if the network device does not complete service data transmission in a downlink slot 3 and still has to-be-transmitted downlink data, the network device needs to wait for a next downlink slot after at least 8 ms based on a frame format configuration to continue transmission.

It can be learned from the foregoing example that, for terrestrial communication, when the RTD is at a microsecond level, communication transmission performed in a manner of preconfiguring a frame format has little impact on a delay of service data. However, in a scenario in which the RTD is at a millisecond level or even reaches hundreds of milliseconds (for example, the NTN), a manner of preconfiguring a frame format cannot satisfy delay requirements of some services.

According to embodiments of this application, in the TDD mode, a first communication apparatus indicates, by using indication information based on a real-time communication requirement and a signal RTD between the first communication apparatus and a second communication apparatus, the second communication apparatus to send a signal. The second communication apparatus determines, based on the indication information of the first communication apparatus, a resource used by the second communication apparatus to send the signal. Therefore, communication efficiency can be improved, and a communication delay can be reduced.

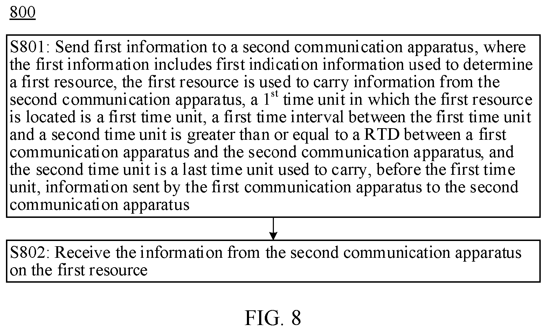

FIG. 8 is a schematic flowchart of a communication method 800 according to an embodiment of this application. It should be understood that a communication apparatus in this embodiment may be configured in a communication device or may be the communication device. This is not limited in this application. The method includes but is not limited to the following steps.

S801: A first communication apparatus sends first information to a second communication apparatus, where the first information includes first indication information used to determine a first resource, the first resource is used to carry information from the second communication apparatus, a 1^{st} time unit in which the first resource is located is a first time unit, a first time interval between the first time unit and a second time unit is greater than or equal to a signal RTD between the first communication apparatus and the second communication apparatus, and the second time unit is a last time unit used to carry, before the first time unit, information sent by the first communication apparatus to the second communication apparatus.

When the first communication apparatus needs to indicate the second communication apparatus to send the information to the first communication apparatus, the first communication apparatus may determine the first time unit for receiving the information from the second communication apparatus. The time interval between the first time unit and the last time unit (namely, the second time unit) in which the first communication apparatus sends the information to the second communication apparatus before the first time unit is greater than or equal to the signal RTD between the first communication apparatus and the second communication apparatus. The first communication apparatus determines, based on the RTD and a scheduling parameter (for example, K₁ and K₂ described above), the first time unit for receiving the information from the second communication apparatus. In this solution, resource allocation can be performed based on an actual communication service requirement, to improve resource utilization. In addition, the RTD is considered during resource allocation, so that occurrence of a conflict between a receiving resource and a sending resource of the second communication apparatus due to a signal round-trip transmission delay can be reduced, and communication efficiency can be improved.

After determining the first time unit, the first communication apparatus may configure the first time unit as a receiving time unit of the first communication apparatus. In other words, the first communication apparatus is in a receiving state in the first time unit, so that when the first time unit arrives, the first communication apparatus may receive the information from the second communication apparatus in the first time unit.

Correspondingly, the second communication apparatus receives the first information from the first communication apparatus. The second communication apparatus may determine, based on the first indication information, the first resource used by the first communication apparatus to receive the information sent by the second communication apparatus. The second communication apparatus may determine, based on the first resource and a TA, a resource used by the second communication apparatus to send the information to the first communication apparatus. In this way, after the information sent by the second communication apparatus on the resource is transmitted through a channel, the first communication apparatus can receive the information in the first time unit.

The first communication apparatus may configure, for the second communication apparatus, a resource for receiving the information from the first communication apparatus. The second communication apparatus detects the information from the first communication apparatus on the configured resource, and determines a sending resource of the second communication apparatus based on a scheduling indication of the first communication apparatus. Alternatively, the second communication apparatus preconfigures all resources as receiving resources, detects the information from the first communication apparatus on the receiving resources, and determines a sending resource of the second communication apparatus based on an indication of the first communication apparatus. In other words, the first communication apparatus does not preconfigure, for the second communication apparatus, a resource used by the second communication apparatus to send information. When the second communication apparatus needs to send information to the first communication apparatus, the first communication apparatus allocates, based on a real-time communication requirement and a transmission requirement of a current ongoing service, a resource used by the second communication apparatus to send the information, and notifies the second communication apparatus by using indication information. Therefore, resource utilization and communication efficiency can be improved.

Specific implementations of the first indication information may include but are not limited to the following implementations.

In an implementation, the first indication information includes a first offset. The first offset is a time offset between a time unit in which the first information is located and the first time unit, or the first offset is a time offset between the second time unit and the first time unit.

For example, the first offset may be represented by using a quantity of slots or a quantity of symbols, or the first offset may be a time length, for example, in a unit of microsecond or millisecond.

Optionally, the first indication information may further include an identifier of a start symbol occupied by the first resource and a quantity of symbols that last.

The second communication apparatus may determine, based on the first offset, the 1^{st} time unit (namely, the first time unit) occupied by the first resource, and the first indication information may further include the identifier of the start symbol occupied by the first resource and the quantity of symbols that last. The second communication apparatus determines, based on the identifier of the start symbol, a 1^{st} symbol occupied by the first resource in the first time unit, and then may determine a time domain position of the first resource based on the quantity of symbols that last.

In another implementation, the first indication information includes an identifier of the first time unit.

Optionally, the first indication information may further include an identifier of a start symbol occupied by the first resource and a quantity of symbols that last.

The second communication apparatus may determine, based on the identifier of the first time unit in the first indication information, the 1^{st} time unit occupied by the first resource, that is, the first time unit, and determine a time domain position of the first resource based on the identifier of the start symbol occupied by the first resource and the quantity of symbols that last that are in the first indication information.

S802: The first communication apparatus receives the information from the second communication apparatus on the first resource.

After the second communication apparatus sends the information to the first communication apparatus based on the first time unit and the TA, the first communication apparatus receives the information from the second communication apparatus on the first resource.

According to the foregoing solution, the first communication apparatus indicates, by using indication information based on a real-time communication requirement and the signal RTD between the first communication apparatus and the second communication apparatus, the second communication apparatus to send a signal. The second communication apparatus determines, based on the indication information of the first communication apparatus, a resource used by the second communication apparatus to send the signal. Therefore, communication efficiency can be improved, and a communication delay can be reduced.

The communication method 800 shown in FIG. 8 includes but is not limited to the following implementation 1 to implementation 5. The following describes the implementations.

Implementation 1: The first information indicates the second communication apparatus to send first data to the first communication apparatus, and the first resource is used to carry the first data.

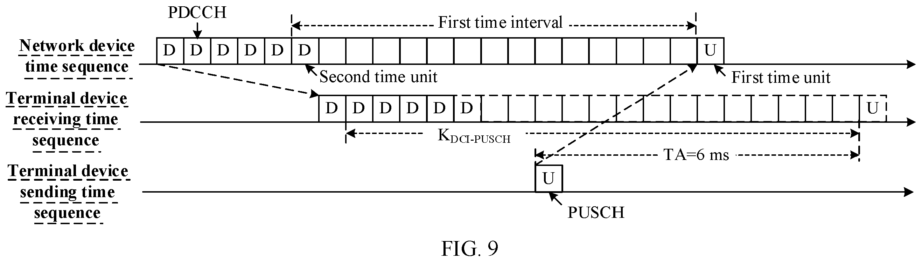

For example, the first communication apparatus is a network device, and the second communication apparatus is a terminal device. As shown in FIG. 9, an example in which an SCS is 30 kHz and a time unit is 0.5 ms is used. The network device may determine a signal RTD between the network device and the terminal device based on a distance between the network device and the terminal device or a TA reported by the terminal device, for example, RTD=6 ms. The network device determines that the terminal device needs to send uplink data, and the network device may determine, based on the signal RTD between the network device and the terminal device, a PUSCH resource (where the PUSCH is an example of the first resource) used to carry the uplink data. As shown in FIG. 9, the network device sends downlink information to the terminal device in six consecutive downlink time units (time units marked as D in FIG. 9), and a time unit in which the PUSCH is located and that is determined by the network device based on the signal RTD is the first time unit marked as U in FIG. 9. The first time interval between the first time unit and the last downlink time unit (namely, the second time unit) used to carry, before the first time unit, the downlink information sent by the network device to the terminal device is 15 time units, namely, 7.5 ms. The first time interval is greater than the signal RTD between the network device and the terminal device. For example, the network device may send DCI (where the DCI is an example of the first information) to the terminal device on a physical downlink control channel (physical control channel, PDCCH) in a 2^{nd} downlink time unit in the six downlink time units used to carry the downlink information, where the DCI is used to determine the PUSCH resource. The DCI is transmitted to the terminal device after RTD/2=3 ms. The terminal device determines, based on K_{DCI-PUSCH} and the TA, a PUSCH for sending the uplink data. As shown in FIG. 9, the PUSCH is located in a time unit marked as U in a sending time sequence of the terminal device. K_{DCI-PUSCH} is a time interval that is between the PUSCH and the DCI and that is indicated by the network device. For example, the terminal device determines that K_{DCI-PUSCH}=K_{offset}+K₂ based on K_{offset} configured by using a MAC CE and K₂ indicated by the DCI. Specifically, the terminal device may determine, based on a time unit in which the DCI is located and K_{DCI-PUSCH}, a time unit in which a PUSCH corresponding to a receiving time sequence is located, and then determine, based on the TA, a sending time sequence time unit in which the PUSCH used by the terminal device to send the uplink data is located. The terminal device sends the uplink data on the PUSCH in the time unit. In this way, the uplink data is transmitted to the network device in the first time unit after RTD/2=3 ms. It should be understood that the second time unit shown in FIG. 9 may be used to carry other DCI, downlink data, a reference signal, or the like sent by the network device to the terminal device. In addition, in the following example in FIG. 10, the second time unit may alternatively be a time unit used to carry the DCI, and may be determined based on a specific implementation. This is not limited in this application.

In this solution, the network device does not perform uplink and downlink preconfiguration on the resource, so that the network device can allocate an uplink resource when a transmission delay requirement of a downlink service is satisfied. This can reduce a case in which transmission cannot continue because preconfigured downlink resources are insufficient when downlink data transmission is not completed. Similarly, the network device may allocate sufficient uplink resources to the terminal device to perform uplink data transmission, to reduce a case in which data transmission cannot be completed due to insufficient uplink resources. Therefore, a data transmission delay can be reduced, and communication efficiency can be improved. When the network device allocates the uplink resource to the terminal device, it is ensured that a time interval between the uplink resource and the last time unit in which the network device sends the downlink information to the terminal device is greater than or equal to the RTD, so that an uplink-downlink conflict of the terminal device can be avoided. Therefore, communication efficiency is further improved.

In an example, the second time unit is used to carry the first information, and the first time interval being greater than or equal to the signal round-trip delay includes: The first time interval is greater than or equal to a sum of the signal round-trip delay and a third time interval, and the third time interval is a time interval between receiving the first information by the second communication apparatus and sending the first data by the second communication apparatus.

For example, as shown in FIG. 10, the network device sends DCI to the terminal device on a PDCCH in the second time unit. In this case, the first time interval is a time interval K_{DCI-PUSCH} between the DCI and the PUSCH. In addition to the signal RTD that needs to be overcome to avoid an uplink-downlink conflict, the first time interval further needs to reserve the third time interval for the terminal device. The third time interval is a time interval between receiving the DCI by the terminal device and sending the uplink data by the terminal device (where the uplink data is an example of the first data). In other words, the network device reserves, for the terminal device, preparation time from receiving the DCI by the terminal device to decoding the DCI and performing processing such as modulation and coding on the uplink data based on the DCI, so that the terminal device can send the uplink data on the PUSCH in an uplink time unit in the sending time sequence of the terminal device. In this way, the network device can receive the uplink data on the PUSCH in the first time unit.

Implementation 2: The first information indicates second data sent by the first communication apparatus to the second communication apparatus. The first information further includes second indication information. The second indication information is used to determine a second resource. The second resource is used to carry the second data. The first resource is used by the first communication apparatus to receive feedback information from the second communication apparatus. The feedback information indicates that the second communication apparatus successfully receives or fails to receive the second data.

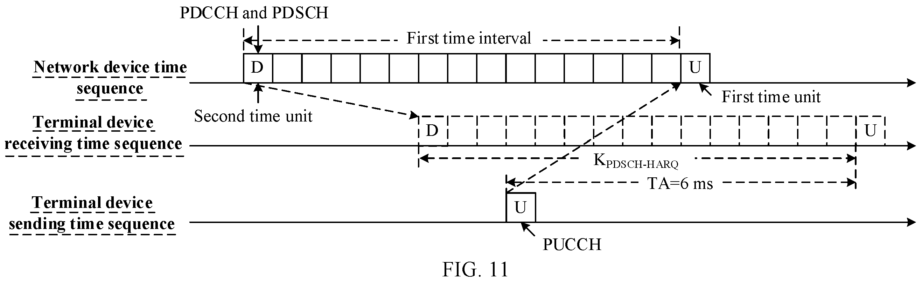

For example, the first information may be DCI (where the DCI is an example of the first information) sent by the network device to the terminal device on a PDCCH. The DCI includes second indication information. The second indication information is used to determine a PDSCH (where the PDSCH is an example of the second resource) used by the network device to send downlink data to the terminal device. The DCI further includes first indication information, and the first indication information is used to determine a PUCCH used to carry HARQ feedback information (where the PUCCH is an example of the first resource). The network device determines, based on the signal RTD between the network device and the terminal device and the last time unit in which the downlink information is sent to the terminal device before the PUCCH, the first time unit in which the HARQ feedback information from the terminal device is received, that is, a time unit in which the PUCCH is located, and notifies the terminal device by using the first indication information. As shown in FIG. 11, both the PDCCH used to carry the DCI and the PDSCH used to carry the downlink data are in the second time unit. The terminal device receives the DCI after RTT/2, and receives the downlink data on the PDSCH based on the DCI. The terminal device determines, based on K_{PDSCH-HARQ} and the TA, the PUCCH used by the terminal device to send the HARQ feedback information. K_{PDSCH-HARQ} is a time interval between the PDSCH indicated by the network device and the HARQ feedback information. For example, the terminal device determines that K_{PDSCH-HARQ}=K_{offset}+K₁ based on K_{offset} configured by using a MAC CE and K₁ indicated by the DCI. The terminal device may determine, based on a time unit in which the PDSCH is located and K_{PDSCH-HARQ}, a time unit in which a PUCCH corresponding to a receiving time sequence is located, and then determine, based on the TA, a sending time sequence time unit in which the PUSCH used by the terminal device to send the HARQ feedback information is located. The terminal device sends the HARQ feedback information on the PUCCH in the time unit. In this way, the uplink data is transmitted to the network device in the first time unit after RTD/2=3 ms. The network device determines, based on the HARQ feedback information, that the terminal device successfully receives or fails to receive the downlink data carried on the PDSCH.

In an example, if the second time unit is a last time unit in which the second resource is located, in other words, the second time unit is the last time unit used to carry the second data, the first time interval being greater than or equal to the signal round-trip delay includes: The first time interval is greater than or equal to a sum of the signal RTD and a fourth time interval, and the fourth time interval is a time interval between receiving the second data by the second communication apparatus and sending the feedback information by the second communication apparatus.

In the example shown in FIG. 11, the PDSCH is located in the second time unit. Because the PDSCH occupies only one time unit, the second time unit is the last time unit in which the PDSCH is located. In this case, the first time interval is a time interval K_{PDSCH-HARQ} between the PDSCH and the PUCCH that is used to carry the HARQ feedback information. In addition to the signal RTD that needs to be overcome to avoid an uplink-downlink conflict, the first time interval further needs to reserve the fourth time interval for the terminal device. The fourth time interval is a time interval between receiving the PDSCH by the terminal device and sending the HARQ feedback information by the terminal device. In other words, the network device reserves, for the terminal device, preparation time from receiving the PDSCH by the terminal device, decoding the PDSCH, to determining whether the PDSCH is successfully received to obtain the HARQ feedback information, so that the terminal device can successfully send the HARQ feedback information on the PUCCH in an uplink time unit in the sending time sequence of the terminal device. In this way, the network device can receive the HARQ feedback information on the PUCCH in the first time unit.

It should be understood that, in the embodiment shown in FIG. 11, an example in which the second time unit is the last time unit in which the PDSCH is located is used for description. However, this application is not limited thereto. The last time unit occupied by the PDSCH may alternatively be a time unit before the second time unit. The second time unit may be a time unit in which the network device sends other downlink information to the terminal device.

According to the foregoing solution, a case in which service transmission cannot be completed due to insufficient preconfigured resources can be reduced. Therefore, a transmission delay can be reduced, and communication efficiency can be improved. When the first communication apparatus allocates a sending resource of the second communication apparatus, it is ensured that a time interval between the last time unit in which the first communication apparatus sends the information to the second communication apparatus and the 1^{st} time unit in which the second communication apparatus sends the information is greater than or equal to the RTD, so that a sending and receiving conflict of the second communication apparatus can be avoided. This further improves communication efficiency.

Implementation 3: The first resource is used by the first communication apparatus to receive channel state information (channel state information, CSI) from the second communication apparatus.

The second communication apparatus may measure a channel state based on a reference signal sent by the first communication apparatus, to obtain the channel state information. The first communication apparatus may determine, based on the signal RTD between the first communication apparatus and the second communication apparatus, the first resource for receiving the channel state information from the second communication apparatus. A time interval between the 1^{st} time unit (namely, the first time unit) of the first resource and the last time unit used to carry, before the first time unit, the information sent by the first communication apparatus to the second communication apparatus is greater than or equal to the signal RTD between the first communication apparatus and the second communication apparatus. The first communication apparatus sends the first information to the second communication apparatus, where the first information includes the first indication information used to determine the first time unit. The second communication apparatus may send the channel state information to the first communication apparatus based on the first indication information and the TA.

In an example, the second time unit is used to carry a reference signal and/or the first information. The second communication apparatus measures the reference signal to obtain the channel state information, and sends the channel state information to the first communication apparatus based on the first indication information and the TA.

For example, the network device may notify, by using DCI, the terminal device of the first resource used by the network device to receive the CSI, and the first resource belongs to the first time unit. The network device sends a CSI-RS to the terminal device in the second time unit after sending the DCI, and the network device determines not to send other downlink information to the terminal device temporarily after the second time unit. In this case, the second time unit is a last downlink time unit before the terminal device sends the CSI, the network device determines, based on the second time unit and the signal RTD between the network device and the terminal device, that the first time unit whose interval from the second time unit is greater than the RTD is used to receive the CSI from the terminal device. The network device may send, to the terminal device, the DCI used to determine the first resource. The terminal device receives the DCI RTD/2 later after the network device sends the DCI, and determines, based on the TA and an indication of the DCI, an uplink time unit used to send the CSI in a sending time sequence of the terminal device. In addition, after sending the DCI, the network device sends, to the terminal device in the second time unit, the CSI-RS used to obtain the CSI. After receiving the CSI-RS and obtaining the CSI through measurement, the terminal device sends the CSI to the network device in the uplink time unit determined by the terminal device. In this way, the network device can receive the CSI in the first time unit.

In this example, the first information further includes third indication information, and the third indication information is used to trigger the second communication apparatus to send the channel state information. That a first time interval between the first time unit and a second time unit is greater than or equal to a signal RTD between the first communication apparatus and the second communication apparatus includes: A fifth time interval is greater than or equal to the signal RTD between the first communication apparatus and the second communication apparatus, the fifth time interval is a time interval between a reference moment and a start moment of the first resource, there is an interval of a first processing duration between the reference moment and an end moment of the first information; or there is an interval of a second processing duration between the reference moment and an end moment of the reference signal, and the first processing duration and the second processing duration are determined based on a predefined CSI processing delay parameter.

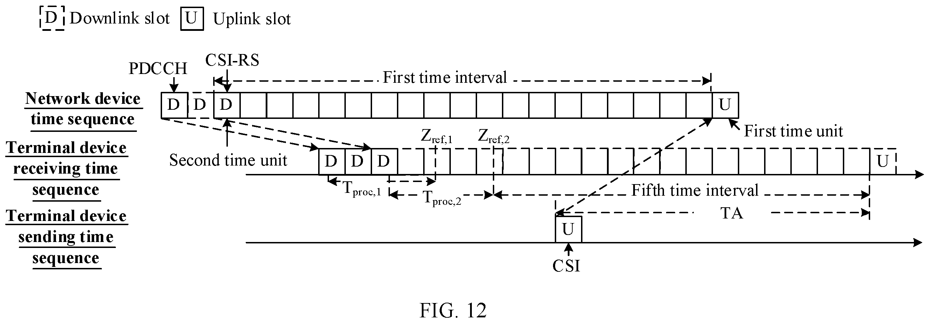

For example, the network device sends downlink information to the terminal device in three consecutive downlink slots shown in FIG. 12. The DCI is sent to the terminal device in a 1^{st} slot in the three downlink slots, where the DCI includes the first indication information and CSI request (CSI request) information, and the first resource indicated by the first indication information is determined by the network device based on the reference moment and the signal RTD. Specifically, the network device determines a first reference symbol Z_{ref,1} and a second reference symbol Z_{ref,2}. As shown in FIG. 12, there is an interval of a first processing duration T_{proc,1} between a start moment of the first reference symbol Z_{ref,1} and an end moment of a last symbol used to carry the DCI. There is an interval of a second processing duration T_{proc,2} between a start moment of the second reference symbol Z_{ref,2} and an end moment of a last symbol used to carry the CSI-RS. A later one of the start moment of the first reference symbol Z_{ref,1} and the start moment of the second reference symbol Z_{ref,2} is used as the reference moment. In the example shown in FIG. 12, the start moment of the second reference symbol Z_{ref,2} is used as the reference moment. The start moment of the first resource determined by the network device needs to satisfy that an interval between the start moment of the first resource and the start moment of the second reference symbol Z_{ref,2} is greater than or equal to the signal RTD. Correspondingly, the start moment that is of the uplink resource for sending the CSI and that is determined by the terminal device based on the first indication information and the TA is not earlier than the start moment of the second reference symbol Z_{ref,2}. In this way, the terminal device has sufficient time to measure the CSI-RS and obtain the CSI through calculation. The network device and the terminal device may determine the first processing duration and the second processing duration based on the predefined CSI processing delay parameter.

In another example, the second time unit is used to carry the first information, and the reference signal used to measure the CSI is carried in a time unit before the second time unit.

For example, the network device may first send, to the terminal device in a time unit (that is, a time unit before the second time unit), the CSI-RS used to measure the CSI. After the CSI-RS arrives at the terminal device, the terminal device measures the CSI-RS to obtain the CSI. After sending the CSI-RS, the network device sends DCI to the terminal device in another time unit (that is, the second time unit). The DCI is used to determine the first resource used to carry the CSI, and the first resource belongs to the first time unit. The network device does not send downlink information to the terminal device temporarily after sending the DCI in the second time unit, and the first time interval between the first time unit and the second time unit is greater than or equal to the signal RTD between the network device and the terminal device. After receiving the DCI, the terminal device may determine an uplink time unit in which the terminal device sends the CSI, and the CSI sent by the terminal device in the uplink time unit can be received by the network device in the first time unit.

In still another example, both the first information and the reference signal used to obtain the channel state information are carried in the second time unit.

For example, the network device determines, based on the second time unit and the signal RTD, the first time unit used to receive the CSI, and notifies the terminal device by using DCI sent in the second time unit. In addition, the network device further sends, to the terminal device in the second time unit, the CSI-RS used to measure the CSI. After the DCI and the CSI-RS arrive at the terminal device in a same time unit, the terminal device measures the CSI-RS to obtain the CSI, determines, based on the DCI, an uplink time unit for sending the CSI, and sends the CSI to the network device in the time unit.

Implementation 4: The first resource is a random access resource. The first communication apparatus is configured to receive random access request information from the second communication apparatus on the random access resource.

The network device needs to configure, for the terminal device, a random access resource used for random access. Before performing a random access procedure, the terminal device needs to receive a synchronization signal and physical broadcast channel block (synchronization signal and physical broadcast channel block, SSB) to perform downlink synchronization and obtain a master information block (master information block, MIB). The terminal device may obtain a system information block (system information block, SIB) 1 based on the MIB, and may obtain another system (other system information, OSI) based on the SIB 1, for example, the OSI includes a SIB 19. The terminal device may determine a distance between the network device and the terminal device based on the SIB 19, to determine a TA. Therefore, the network device may determine the random access resource based on a last time unit (that is, the second time unit) for downlink information that needs to be received by the terminal device before the random access procedure. A time interval between a 1^{st} time unit (that is, the first time unit) of the random access resource and the second time unit is greater than or equal to the signal RTD between the network device and the terminal device. The signal RTD may be a maximum signal RTD within coverage of a beam of the network device, so that a terminal device at a beam edge (that is, a terminal that is farthest from the network device within coverage of the beam) does not have an uplink-downlink conflict, and can access a network.

For example, the second time unit may be a time unit used to carry the SIB 19 including ephemeris information. After determining the TA based on the SIB 19, the terminal device may perform the random access procedure. Therefore, the network device may determine, based on the time unit in which the SIB 19 is located, the first time unit whose time interval from the time unit in which the SIB 19 is located is greater than or equal to the signal RTD between the network device and the terminal device, where the first time unit is used as the 1^{st} time unit of the random access resource.

The random access resource includes a plurality of random access channel (random access channel, RACH) occasions, and the first indication information is specifically used to determine the plurality of random access channel occasions. The first indication information includes but is not limited to one or more of the following information:
time domain position information of the first time unit, a quantity of RACH occasions in the random access resource, a start location of the RACH occasion, or a time domain length of the RACH occasion.

The time domain position information of the first time unit may include an identifier of the first time unit. Alternatively, the time domain position information of the first time unit may include the first offset. The first offset is an offset between the time unit in which the first information is located and the first time unit, or the first offset is an offset between the second time unit and the first time unit. The second offset may be represented by using a quantity of time units or a time length (in a unit of microsecond or millisecond).

The network device configures, by using the first indication information, the plurality of random access channel occasions included in the random access resource, so that the terminal device that needs to perform the random access procedure may determine the plurality of random access channel occasions based on the first indication information, and select one of the random access channel occasions to send the random access request information. For example, the terminal device may determine, based on the time domain position information of the first time unit in the first indication information, the 1^{st} time unit in which the random access resource is located, and determine, based on the quantity of RACH occasions in the first indication information, the quantity of RACH occasions included in the random access resource. If the first indication information further includes the start location and the time domain length of the RACH occasion, the terminal device may determine a time domain position of each RACH occasion in the random access resource. In this way, one of the RACH occasions is selected to send the random access request message.

For example, the first information may be a SIB 1, and the SIB 1 includes the first indication information. The network device may configure the random access resource for the terminal device based on a communication requirement by using the SIB 1. The network device configures the random access resource by using the SIB 1, so that flexibility of random access resource configuration can be improved, and communication efficiency can be improved.

In an implementation, the first information is used to configure a random access resource corresponding to a first beam. The first communication apparatus further sends second information, where the second information is used to configure a random access resource corresponding to a second beam, and the random access resource corresponding to the first beam does not overlap the random access resource corresponding to the second beam.

For example, the network device serves one cell by using a plurality of beams. Each of the plurality of beams is used to send a SIB 1 corresponding to the beam. The SIB 1 sent by using each beam is used to configure a random access resource corresponding to the beam, and random access resources configured for SIBs 1 sent by using different beams do not overlap, in other words, random access resources corresponding to different beams do not overlap. In this way, the network device can determine, based on the random access resource used by the terminal device to send the random access request information, that the terminal device is within coverage of the beam corresponding to the random access resource.

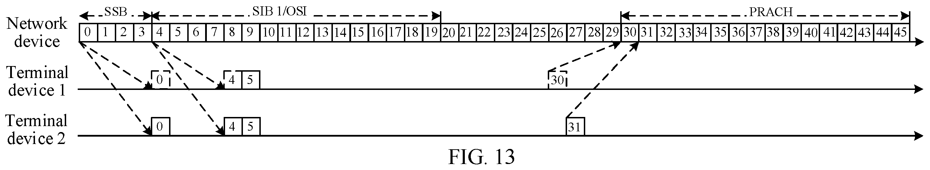

For example, the network device may determine, based on the OSI, a random access resource whose interval from the last time unit in which the OSI is located is greater than or equal to the signal RTD between the network device and the terminal device. For example, a maximum signal RTD between a terminal device and a network device in the cell is 4 ms, an SCS is 30 kHz, and the signal RTD is a length of eight time units. As shown in FIG. 13, the first time interval is greater than or equal to the length of the eight time units. The network device sends an SSB in a time unit 0 to a time unit 3 by using the plurality of beams, and separately sends, in 16 time units from a time unit 4 to a time unit 19 by using the plurality of beams, a SIB 1 and OSI corresponding to each beam. A terminal device 1 is close to a terminal device 2, and signal RTDs between the terminal device 1 and the network device and between the terminal device 2 and the network device are both 4 ms, that is, the length of the eight time units. In this case, a one-way transmission delay is 2 ms, that is, a length of four time units. Both the terminal device 1 and the terminal device 2 detect an SSB sent by a same beam (for example, a beam A) of the network device in a time unit 0, and the terminal device 1 and the terminal device 2 receive, in a time unit 4 and a time unit 5 based on the SSB, a SIB 1 and OSI corresponding to the beam A. The terminal device 1 and the terminal device 2 may determine, based on the SIB 1, a random access resource corresponding to the beam A. For example, the SIB 1 is used to configure that the random access resource corresponding to the beam A includes N RACH occasions in a time unit 30 and a time unit 31. The terminal device 1 and the terminal device 2 separately select one RACH occasion from the N RACH occasions to send the random access request information. For example, the terminal device 1 selects one RACH occasion in the time unit 30, and the terminal device 1 sends the random access request information to the network device based on the TA. The network device may receive the random access request information from the terminal device 1 in the time unit 30 of the network device, and the network device may determine, based on that the terminal device 1 sends the random access request information by using a RACH occasion corresponding to the beam A, that the terminal device 1 is located within coverage of the beam A. For example, the terminal device 2 selects one RACH occasion in the time unit 31, and sends the random access request information to the network device based on the TA. The network device may receive the random access request information in the time unit 31, and determine that the terminal device 2 is located within the coverage of the beam A. If the terminal device 1 and the terminal device 2 select a same RACH occasion to send the random access request information, a conflict occurs. The network device may perform conflict resolution, or a random access procedure may fail. The terminal device 1 and the terminal device 2 may re-initiate a random access procedure based on a random access resource configured by using a next received SIB 1. In this example, the network device further sends the SSB in one of the time unit 0 to the time unit 3 by using another beam (for example, a beam B), and sends, in one of the 16 time units from the time unit 4 to the time unit 19, a SIB 1 and OSI corresponding to the beam B. A terminal device within coverage of the beam B may receive the SIB 1 corresponding to the beam B, determine, based on the SIB 1, a random access resource corresponding to the beam B, and select a RACH occasion in the random access resource to send the random access request information.

In an implementation, after sending the random access request information, the second communication apparatus detects random access response information from the first communication apparatus in a second time interval after a fifth time unit. The fifth time unit is a downlink time unit whose identifier is the same as an identifier of an uplink time unit used by the second communication apparatus to send the random access request information. Correspondingly, after receiving the random access request information from the second communication apparatus, the first communication apparatus sends the random access response information to the second communication apparatus in the second time interval after receiving the random access request information. For example, the second communication apparatus sends the random access response information to the second communication apparatus in a third time unit. A time interval between the third time unit and a time unit in which the random access request information is received is less than or equal to the second time interval. The second time interval is a time length for detecting the random access response information after the second communication apparatus sends the random access request information.

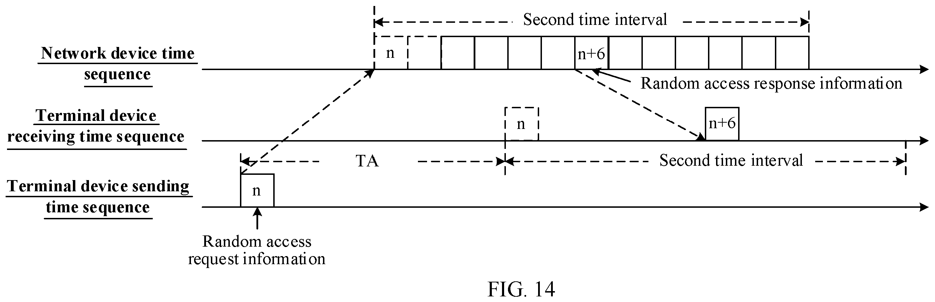

For example, as shown in FIG. 14, the terminal device sends the random access request information to the network device in an uplink time unit n. Correspondingly, the network device receives the random access request information from the terminal device in a time unit n. The network device sends the random access response information to the terminal device only after receiving the random access request information. Therefore, the terminal device needs to detect the random access response information from the network device only after a downlink time unit n. The network device may configure, for the terminal device, the second time interval for detecting the random access response information. The second time interval may be referred to as a random access response (random access response, RAR) detection window. The network device sends the random access response information to the terminal device in the second time interval, and the terminal device detects the random access response information from the network device in the second time interval after the downlink time unit n. If the terminal device does not detect the random access response information from the network device in the second time interval, the terminal device considers that the random access procedure fails. This solution can avoid a case in which the terminal device keeps detecting the random access response information when the network device does not receive the random access request information of the terminal device or the terminal device does not successfully detect the random access response information.

Implementation 5: The first information is random access response information, and the first time unit is used by the first communication apparatus to receive uplink transmission scheduled by using the random access response information.

For example, if the random access procedure initiated by the terminal device is a four-step random access procedure, the random access request information and the random access response information are respectively first-step random access information (message 1, Msg.1) and second-step random access response information (message 2, Msg.2) in the four-step random access procedure, the random access response information sent by the network device to the terminal device includes uplink grant (UL grant) information, and the uplink grant information is used to determine a resource for uplink transmission including third random access information (message 3, Msg.3). A 1^{st} time unit in which the resource is located is a first time unit, and a time interval between the first time unit and a time unit (namely, the second time unit) used to carry, before the first time unit, downlink information sent by the network device to the terminal device is greater than or equal to the signal RTD between the network device and the terminal device. The second time unit may be a time unit used to carry the random access response information, or the second time unit may be a time unit used to carry the downlink information sent by the network device to the terminal device after the time unit used to carry the random access response information.

The foregoing describes a case in which when the first communication apparatus determines that the second communication apparatus needs to send the information to the first communication apparatus, the first communication apparatus may determine, based on the signal RTD, the first resource used by the second communication apparatus to send the information. The first time interval between the 1^{st} time unit (namely, the first time unit) to which the first resource belongs and the last time unit (namely, the second time unit) in which the first communication apparatus sends the information to the second communication apparatus before the first time unit is greater than or equal to the signal RTD, so that a conflict between a sending resource and a receiving resource of the second communication apparatus can be reduced. The first communication apparatus may send, in the first time interval, information to a communication apparatus (for example, a third communication apparatus) other than the second communication apparatus, so that resource utilization can be further improved. In addition, when the third communication apparatus needs to send information to the first communication apparatus, the first communication apparatus may determine, based on a signal RTD between the first communication apparatus and the third communication apparatus, a resource for receiving the information from the third communication apparatus. For details, refer to a manner in which the first communication apparatus determines the first resource. Details are not described herein again.

The following describes a case in which the first communication apparatus may send information and receive information based on a transmission periodicity.

In an implementation, the transmission periodicity of the first communication apparatus includes a sending time period used to send information and a receiving time period used to receive information. The time unit used to carry the first information and the second time unit belong to the sending time period, and the first time unit belongs to the receiving time period.

According to the solution provided in this application, the first communication apparatus may allocate, based on a real-time communication requirement, a resource used by the first communication apparatus to receive the information from the second communication apparatus. In addition, it is ensured that a time interval between the allocated resource and the last time unit in which the first communication apparatus sends the information to the second communication apparatus before the resource is greater than or equal to the signal RTD between the first communication apparatus and the second communication apparatus. This reduces a problem of a sending and receiving conflict of the second communication apparatus.

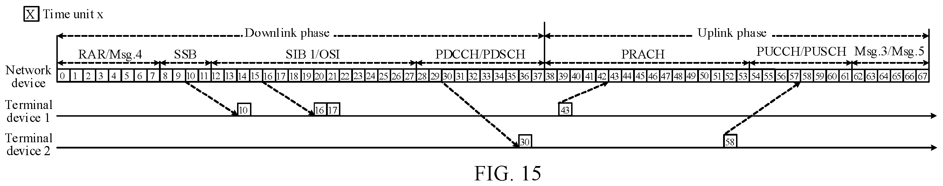

For example, the network device determines a transmission periodicity based on a real-time communication requirement. For example, the transmission periodicity includes 68 time units. For example, an SCS is 30 kHz, and a duration of the transmission periodicity is 34 ms. As shown in FIG. 15, a downlink time period of the transmission periodicity includes 38 time units. The RAR information and fourth-step information (message 4, Msg.4) in the random access procedure occupy eight time units, the SSB occupies four time units, the SIB 1 and the OSI occupy 16 time units, and the PDCCH and the PDSCH occupy 10 time units. An uplink time period includes 30 time units. A physical random access channel (physical RACH, PRACH) occupies 16 time units, the PUCCH and the PUSCH occupy eight time units, and the Msg.3 and fifth-step information (Msg.5) in the random access procedure occupy six time units. RRC connection setup complete information sent by the terminal device to the network device after the terminal device completes the random access procedure is usually referred to as the Msg.5. As shown in FIG. 15, a terminal device 1 may detect an SSB sent by the network device in a downlink time unit 10. For example, a signal RTD between the terminal device 1 and the network device is 4 ms, and a one-way transmission delay is 2 ms, that is, a duration of four time units. The terminal device determines, based on the SSB, that a SIB 1 and OSI corresponding to a beam of the SSB are located in the time unit 16 and the time unit 17, and the terminal device receives the SIB 1 and the OSI in the downlink time unit 16 and the time unit 17 of the terminal device. A corresponding random access resource configured in the SIB 1 is located in a time unit 43, and the terminal device may determine a TA of the terminal device based on the OSI. A time interval between the time unit in which the OSI is located and the time unit 43 to which the random access resource belongs is greater than a signal transmission delay of a longest coverage distance of the beam. Therefore, an uplink-downlink conflict of the terminal device can be prevented. The terminal device 1 selects a RACH occasion in the random access resource configured by the SIB 1, and sends the random access request information based on the RACH occasion and the TA, so that the network device can receive the random access request information in the time unit 43 of the network device 2 ms later. The network device may send the random access response information to the terminal device in a downlink time unit of a next transmission periodicity.

In the transmission periodicity shown in FIG. 15, the network device sends DCI to a terminal device 2 on a PDCCH in a time unit 30. For example, the DCI may indicate downlink data sent by the network device to the terminal device on a PDSCH in the time unit 30, a signal RTD between the terminal device 2 and the network device is 6 ms, and a one-way transmission delay is 3 ms, that is, a duration of six time units. The terminal device receives the DCI in a downlink time unit 30 of the terminal device, and an interval between the downlink time period 30 of the terminal device and a downlink time unit 30 of the network device is 3 ms. The DCI further indicates a time unit 58 in which the PUCCH that carries HARQ feedback information of the downlink data is located, and a time interval between the time unit 58 and the time unit 30 is greater than a signal RTD/2=3 ms between the network device and the terminal device 2. The terminal device sends the HARQ feedback information to the network device in an uplink time unit 58 of the terminal device, and the network device receives the HARQ feedback information in an uplink time unit 58 of the network device 3 ms later.

According to the foregoing manner of flexibly allocating the receiving resource provided in this application, durations of sending time periods in different transmission periodicities of the first communication apparatus may be the same or different, and receiving time periods in different periodicities may be the same or different. Specifically, allocation may be performed based on a real-time communication requirement. In addition, for channels of a same type, time domain positions in different transmission periodicities may be the same or different, and durations in different transmission periodicities may also be the same or different.

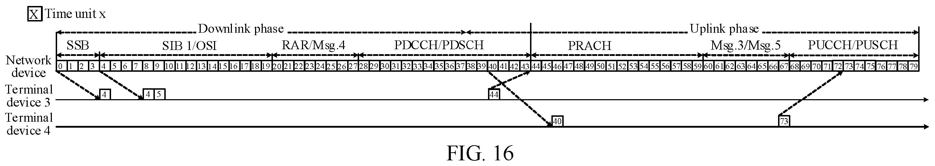

For example, a duration and/or channel distribution of a next transmission periodicity of the transmission periodicity of the network device shown in FIG. 15 may be the same as those of the transmission periodicity shown in FIG. 15. Alternatively, a duration and/or channel distribution of a next transmission periodicity of the transmission periodicity shown in FIG. 15 may be different from those of the transmission periodicity shown in FIG. 15. For example, the next transmission periodicity determined by the network device based on a change of a real-time transmission requirement may be shown in FIG. 16, the transmission periodicity includes 80 time units, and the duration is 40 ms. A downlink time period of the transmission periodicity includes 44 time units. The SSB occupies four time units, the SIB 1 and the OSI occupy 16 time units, the RAR information and the Msg.4 occupy eight time units, and the PDCCH and the PDSCH occupy 16 time units. An uplink time period of the transmission periodicity includes 36 time units. The PRACH occupies 16 time units, the Msg.3 and the Msg.5 occupy eight time units, and the PUCCH and the PUSCH occupy 12 time units. A terminal device 3 may obtain the SSB, the SIB, and the OSI in the transmission periodicity, and perform a random access procedure. A terminal device 4 may receive the uplink data based on the DCI from the network device and send the HARQ feedback information, or send, based on the DCI from the network device, the uplink data to the network device on the PUSCH allocated by the network device. The network device may further communicate with another terminal device in the transmission periodicity. This is not limited in this application.

According to the foregoing solution, the communication apparatus can flexibly configure the transmission periodicity based on the real-time communication requirement, so that a service transmission requirement can be satisfied, and communication efficiency can be improved.

It may be understood that to implement functions in the foregoing embodiments, the base station and the terminal include corresponding hardware structures and/or software modules for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

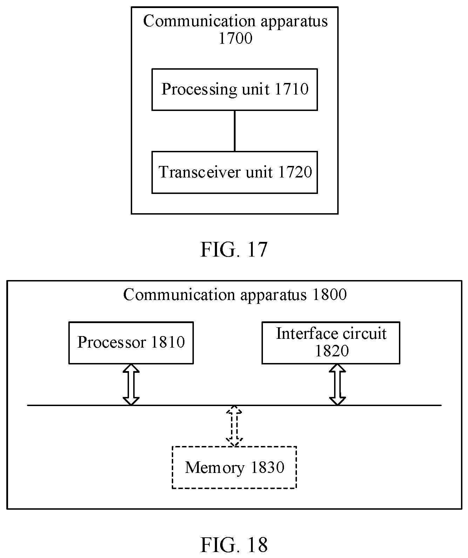

FIG. 17 and FIG. 18 each are a diagram of a structure of a possible communication apparatus according to an embodiment of this application. These communication apparatuses may be configured to implement functions of the terminal or the network device in the foregoing method embodiments. Therefore, beneficial effects of the foregoing method embodiments can also be implemented. In this embodiment of this application, the communication apparatus may be one of the terminals 120a to 120j shown in FIG. 1, or may be the network device 110a or 110b shown in FIG. 1, or may be a module (for example, a chip or a chip system) used in the terminal or the network device.

The communication apparatus 1700 includes a transceiver unit 1720. The transceiver unit 1720 may be configured to receive or send information. The communication apparatus 1700 may further include a processing unit 1710. The processing unit 1710 may be configured to process instructions or data, to implement a corresponding operation.

It should be understood that when the communication apparatus 1700 is a chip configured in (or used in) a communication device, the transceiver unit 1720 in the communication apparatus 1700 may be an input/output interface or a circuit of the chip, and the processing unit 1710 in the communication apparatus 1700 may be a processor in the chip.

Optionally, the communication apparatus 1700 may further include a storage unit 1730. The storage unit 1730 may be configured to store instructions or data. The processing unit 1710 may execute the instructions or the data stored in the storage unit, so that the communication apparatus implements corresponding operations.

The communication apparatus 1700 may be configured to implement functions of the first communication apparatus or the second communication apparatus in the method embodiment shown in FIG. 8.

When the communication apparatus 1700 is configured to implement the functions of the first communication apparatus in the method embodiment shown in FIG. 8, the transceiver unit 1720 is configured to send first information to a second communication apparatus, where the first information includes first indication information, the first indication information is used to determine a first resource, the first resource is used to carry information from the second communication apparatus, a 1^{st} time unit in which the first resource is located is a first time unit, a first time interval between the first time unit and a second time unit is greater than or equal to a signal round-trip delay RTD between the first communication apparatus and the second communication apparatus, and the second time unit is a last time unit used to carry, before the first time unit, information sent by the first communication apparatus to the second communication apparatus. The transceiver unit 1720 is further configured to receive the information from the second communication apparatus on the first resource. The processing unit 1710 is configured to control the transceiver unit 1720 to receive or send the information.

When the communication apparatus 1700 is configured to implement the functions of the second communication apparatus in the method embodiment shown in FIG. 8, the transceiver unit 1720 is configured to receive first information from a first communication apparatus, where the first information includes first indication information, the first indication information is used to determine a first resource, and the first resource is used to carry information sent by the second communication apparatus. The transceiver unit 1720 is further configured to send the information to the second communication apparatus on the first resource. The processing unit 1710 is configured to control the transceiver unit 1720 to receive or send the information.

For more detailed descriptions of the processing unit 1710 and the transceiver unit 1720, refer to related descriptions in the method embodiment shown in FIG. 8.

It should be understood that the transceiver unit 1720 in the communication apparatus 1700 may be implemented through a communication interface (for example, a transceiver, a transceiver circuit, an input/output interface, or a pin), and when the communication interface is the transceiver, the transceiver may include a receiver and/or a transmitter. The processing unit 1710 in the communication apparatus 1700 may be implemented by using at least one processor, or the processing unit 1710 in the communication apparatus 1700 may be implemented by using at least one logic circuit. Optionally, the communication apparatus 1700 further includes a storage unit, and the storage unit may be implemented by using a memory.

As shown in FIG. 18, the communication apparatus 1800 includes a processor 1810 and an interface circuit 1820. The processor 1810 and the interface circuit 1820 are coupled to each other. It may be understood that the interface circuit 1820 may be a transceiver or an input/output interface. Optionally, the communication apparatus 1800 may further include a memory 1830, configured to store instructions executed by the processor 1810, store input data needed by the processor 1810 to run instructions, or store data generated after the processor 1810 runs instructions.

When the communication apparatus 1800 is configured to implement the method shown in FIG. 8, the processor 1810 is configured to perform a function of the processing unit 1810, and the interface circuit 1820 is configured to perform a function of the transceiver unit 1820.

When the communication apparatus is a chip used in a terminal device, the chip in the terminal device may implement a function of the second communication apparatus in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device may implement a function of the first communication apparatus in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The module in the network device herein may be a baseband chip of the network device, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or a storage medium in any other form well-known in the art. For example, a storage medium is coupled to the processor, so that the processor can read information from the storage medium and write the information into the storage medium. The storage medium may alternatively be a component of the processor. The processor and the storage medium may be located in the ASIC. In addition, the ASIC may be located in an access network device or a terminal device. Alternatively, the processor and the storage medium may exist in an access network device or a terminal device as discrete components.

All or a part of the foregoing embodiments may be implemented by using software, hardware, firmware, or any combination thereof. When the software is used to implement the embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a first communication apparatus, first information to a second communication apparatus, wherein the first information comprises first indication information, the first indication information is used to determine a first resource, the first resource is used to carry information from the second communication apparatus, a 1^{st} time unit in which the first resource is located is a first time unit, a first time interval between the first time unit and a second time unit is greater than or equal to a signal round-trip delay RTD between the first communication apparatus and the second communication apparatus, and the second time unit is a last time unit used to carry, before the first time unit, information sent by the first communication apparatus to the second communication apparatus; and
receiving, by the first communication apparatus, the information from the second communication apparatus on the first resource.

2. The method according to claim 1, wherein a transmission periodicity of the first communication apparatus comprises a sending time period used to send information and a receiving time period used to receive information, a time unit used to carry the first information and the second time unit belong to the sending time period, and the first time unit belongs to the receiving time period.

3. The method according to claim 2, wherein durations of at least two transmission periodicities of the first communication apparatus are the same or different; and/or
durations of sending time periods in at least two transmission periodicities of the first communication apparatus are the same or different; and/or
durations of receiving time periods in at least two transmission periodicities of the first communication apparatus are the same or different; and/or
channels of a same type comprised in at least two transmission periodicities of the first communication apparatus have a same time domain position or different time domain positions in the transmission periodicities; and/or
channels of a same type comprised in at least two transmission periodicities of the first communication apparatus have a same duration or different durations in the transmission periodicities.

4. The method according to any one of claims 1 to 3, wherein the first resource is a random access resource; and
the receiving, by the first communication apparatus, the information from the second communication apparatus on the first resource comprises:
receiving, by the first communication apparatus, random access request information from the second communication apparatus on the random access resource.

5. The method according to claim 4, wherein the random access resource comprises a plurality of random access channel occasions, and the random access request information is carried on a first random access channel occasion in the plurality of random access channel occasions.

6. The method according to claim 5, wherein the method further comprises:
sending, by the first communication apparatus, random access response information to the second communication apparatus in a third time unit, wherein a time interval between the third time unit and a time unit in which the first random access channel occasion is located is less than or equal to a second time interval, and the second time interval is a time domain length for detecting the random access response information by the second communication apparatus.

7. The method according to claim 5 or 6, wherein the first indication information comprises one or more of the following information:
time domain position information of the first time unit, a quantity of random access channel occasions in the random access resource, a start location of the random access channel occasion, or a time domain length of the random access channel occasion.

8. The method according to any one of claims 4 to 7, wherein the second time unit is a time unit used to carry first system information, and the first system information comprises ephemeris information.

9. The method according to any one of claims 4 to 8, wherein the first information is second system information, and the second system information comprises scheduling information of system information other than the second system information.

10. The method according to any one of claims 4 to 9, wherein the first information is used to configure a random access resource corresponding to a first beam, and the method further comprises:
sending, by the first communication apparatus, second information, wherein the second information is used to configure a random access resource corresponding to a second beam, and the random access resource corresponding to the first beam does not overlap the random access resource corresponding to the second beam.

11. The method according to claim 1, wherein the first information indicates the second communication apparatus to send first data to the first communication apparatus, and that the first resource is used to carry information from the second communication apparatus comprises: the first resource is used to carry the first data.

12. The method according to claim 11, wherein the first information is random access response information, and the first data is uplink transmission scheduled by using the random access response information.

13. The method according to claim 11 or 12, wherein the second time unit is used to carry the first information.

14. The method according to claim 13, wherein the first time interval being greater than or equal to the signal round-trip delay comprises: the first time interval is greater than or equal to a sum of the signal round-trip delay and a third time interval, wherein
the third time interval is a time interval between receiving the first information by the second communication apparatus and sending the first data by the second communication apparatus.

15. The method according to claim 1, wherein the first information indicates second data sent by the first communication apparatus to the second communication apparatus, the first information further comprises second indication information, the second indication information is used to determine a second resource, the second resource is used to carry the second data, the first resource is used to receive feedback information from the second communication apparatus, and the feedback information indicates that the second communication apparatus successfully receives or fails to receive the second data.

16. The method according to claim 15, wherein the second time unit is a last time unit in which the second resource is located, and the first time interval being greater than or equal to the signal round-trip delay comprises: the first time interval is greater than or equal to a sum of the signal round-trip delay and a fourth time interval, wherein
the fourth time interval is a time interval between receiving the second data by the second communication apparatus and sending the feedback information by the second communication apparatus.

17. The method according to claim 1, wherein the second time unit is used to carry a reference signal and/or the first information, and the first time unit is used to receive channel state information from the second communication apparatus.

18. The method according to claim 17, wherein the first information further comprises third indication information, the third indication information is used to trigger the second communication apparatus to send the channel state information, and the first time interval being greater than or equal to the signal round-trip delay comprises: a fifth time interval is greater than or equal to the signal round-trip delay, wherein
the fifth time interval is a time interval between a reference moment and a start moment of the first resource, there is an interval of a first processing duration between the reference moment and an end moment of the first information, or there is an interval of a second processing duration between the reference moment and an end moment of the reference signal, and the first processing duration and the second processing duration are determined based on a predefined channel state information processing delay parameter.

19. The method according to any one of claims 1 to 18, wherein the method further comprises:
configuring the first time unit as an uplink time unit based on the second time unit and the first time interval.

20. The method according to any one of claims 1 to 19, wherein the first indication information comprises a first offset, and the first offset is a time offset between a time unit in which the first information is located and the first time unit; or the first offset is a time offset between the second time unit and the first time unit; or
the first indication information comprises an identifier of the first time unit.

21. A communication method, comprising:
receiving, by a second communication apparatus, first information from a first communication apparatus, wherein the first information comprises first indication information, the first indication information is used to determine a first resource, and the first resource is used to carry information sent by the second communication apparatus; and
sending, by the second communication apparatus, the information to the first communication apparatus on the first resource.

22. The method according to claim 21, wherein the first resource is a random access resource; and
the sending, by the second communication apparatus, the information to the first communication apparatus on the first resource comprises:
sending, by the second communication apparatus, random access request information to the first communication apparatus on the random access resource.

23. The method according to claim 22, wherein the random access resource comprises a plurality of random access channel occasions; and
the sending, by the second communication apparatus, random access request information to the first communication apparatus on the random access resource comprises:
sending, by the second communication apparatus, the random access request information to the first communication apparatus on a first random access channel occasion, wherein the plurality of random access channel occasions comprise the first random access channel occasion.

24. The method according to claim 23, wherein the method further comprises:
receiving, by the second communication apparatus, random access response information from the first communication apparatus in a second time interval after a fifth time unit, wherein the fifth time unit is a downlink time unit whose identifier is the same as an identifier of an uplink time unit in which the first random access channel occasion is located.

25. The method according to claim 23 or 24, wherein the first indication information comprises one or more of the following information:
time domain position information of a first time unit, a quantity of random access channel occasions in the random access resource, a start location of the random access channel occasion, or a time domain length of the random access channel occasion, wherein
the first time unit is a 1^{st} time unit in which the first resource is located.

26. The method according to claim 25, wherein the time domain position information comprises a first offset, and the first offset is a time offset between a time unit in which the first information is located and the first time unit;
the first offset is a time offset between a time unit in which first system information is located and the first time unit, and the first system information comprises ephemeris information; or
the first indication information comprises an identifier of the first time unit.

27. The method according to any one of claims 21 to 26, wherein the first information is second system information, and the second system information comprises scheduling information of system information other than the second system information.

28. A communication apparatus, comprising:
a processing unit, configured to determine first information, wherein the first information comprises first indication information, the first indication information is used to determine a first resource, the first resource is used to carry information from a second communication apparatus, a 1^{st} time unit in which the first resource is located is a first time unit, a first time interval between the first time unit and a second time unit is greater than or equal to a signal round-trip delay RTD between the first communication apparatus and the second communication apparatus, and the second time unit is a last time unit used to carry, before the first time unit, information sent by the first communication apparatus to the second communication apparatus; and
a transceiver unit, configured to send the first information to the second communication apparatus, wherein
the transceiver unit is further configured to receive the information from the second communication apparatus on the first resource.

29. A communication apparatus, comprising:
a transceiver unit, configured to receive first information from a first communication apparatus, wherein the first information comprises first indication information, the first indication information is used to determine a first resource, and the first resource is used to carry information sent by the second communication apparatus; and
a processing unit, configured to determine the first resource based on the first indication information, wherein
the transceiver unit is further configured to send the information to the first communication apparatus on the first resource.

30. A communication apparatus, comprising at least one processor coupled to a memory, wherein
the memory is configured to store a program or instructions; and
the at least one processor is configured to execute the program or the instructions, to enable the apparatus to implement the method according to any one of claims 1 to 20, or implement the method according to any one of claims 21 to 27.

31. The apparatus according to claim 30, wherein the communication apparatus further comprises the memory.

32. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 20 or the method according to any one of claims 21 to 27 by using a logic circuit or executing code instructions.

33. A computer-readable storage medium, wherein the storage medium stores a computer program or instructions; and when the computer program or the instructions are executed by a communication apparatus, the method according to any one of claims 1 to 20 or the method according to any one of claims 21 to 27 is implemented.
